(19) Europäisches Patentamt
European Patent Office
Office européen des brevets

(11) **EP 4 383 932 A1**

(12) **EUROPEAN PATENT APPLICATION**
published in accordance with Art. 153(4) EPC

(43) Date of publication:
**12.06.2024 Bulletin 2024/24**

(21) Application number: **22851954.2**

(22) Date of filing: **26.07.2022**

(51) International Patent Classification (IPC):
**H04W 76/28** (2018.01)

(52) Cooperative Patent Classification (CPC):
**H04L 5/00; H04W 72/12; H04W 76/28;** Y02D 30/70

(86) International application number:
**PCT/CN2022/107746**

(87) International publication number:
**WO 2023/011240 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.08.2021 CN 202110904386**

(71) Applicant: **Datang Mobile Communications
Equipment Co., Ltd.
Beijing 100085 (CN)**

(72) Inventors:
• **LUO, Chen
Beijing 100085 (CN)**

• **WANG, Jiaqing
Beijing 100085 (CN)**
• **YANG, Meiying
Beijing 100085 (CN)**
• **ZHANG, Yinghao
Beijing 100085 (CN)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **DATA TRANSMISSION METHOD AND APPARATUS, NETWORK SIDE DEVICE, AND TERMINAL**

(57) Data transmission method, data transmission apparatus, network-side device and terminal are provided, which are related to the technical field of communications. The method includes: generating first downlink control information DCI by the network side device, the first DCI being used to schedule a first service; and sending the first DCI in Discontinuous Reception DRX on duration and/or DRX off duration.

Generating first Downlink Control Information (DCI) by a network-side device, where the first DCI includes information of scheduling a first service — 201

Sending the first DCI in a Discontinuous Reception (DRX) On duration and/or a DRX Off duration by the network-side device — 202

**FIG. 2**

## Description

## CROSS-REFERENCE TO RELATED APPLICATION

This application claims a priority to Chinese Patent Application No. 202110904386.9 filed on August 6, 2021, the disclosures of which are incorporated in their entirety by reference herein.

## TECHNICAL FIELD

The present disclosure relates to the field of communications technology, and in particular, to a data transmission method, a data transmission apparatus, a network-side device, and a terminal.

## BACKGROUND

When a user configures a Discontinuous Reception (DRX) group, user equipment (UE) will perform non-continuous monitoring of a Physical Downlink Control Channel (PDCCH) of all serving cells. In a DRX cycle, the UE monitors the PDCCH only in an On duration, and in a "Opportunity for DRX", i.e. DRX OFF time, the UE does not receive a PDCCH other than a scheduling broadcast signaling, so as to reduce power consumption, that is, enter a sleep mode.

The DRX mechanism mainly does not monitor, in the DRX off time, a PDCCH scrambled by a Radio Network Temporary Identity (RNTI), and specifically the RNTI includes: a Cell Radio Network Temporary Identity (C-RNTI), a Control Information Radio Network Temporary Identity (CI-RNTI), a Configured Scheduling Radio Network Temporary Identity (CS-RNTI), Interruption Radio Network Temporary Identity (INT-RNTI), Slot Format Indication RNTI (SFI-RNTI), Semi-Persistent Channel State Information RNTI (SP-CSI-RNTI), a Transmit Power Control Physical Uplink Control Channel Radio Network Temporary Identity (TPC-PUCCH-RNTI), Transmit Power Control Physical Uplink Shared Channel Radio Network Temporary Identity (TPC-PUSCH-RNTI), Transmit Power Control Sounding Reference Signal Radio Network Temporary Identity (Transmit Power Control-Sounding Reference (TPC-SRS-RNTI), and AI-RNTI. The C-RNTI is mainly used for scrambling Downlink Control Information (DCI) for data scheduling.

It can be seen that, in the related DRX mechanism, the RNTI related to scheduling is influenced by parameter configuration of the DRX On duration, so that when configuring a DRX parameter, comprehensive influence of a plurality of services needs to be considered, as a result, the DRX cycle configuration cannot match with a specific service, and unnecessary transmission delay is introduced.

## SUMMARY

An objective of the embodiments of the present disclosure is to provide a data transmission method, a data transmission apparatus, a network-side device, and a terminal, so as to solve the problem in the related art that an unnecessary wait delay is introduced due to the fact that the DRX cycle configuration cannot match a specific service.

To achieve the above objective, the embodiments of the present disclosure provide a data transmission method. The method includes: generating first Downlink Control Information (DCI) by a network-side device, wherein the first DCI is configured to schedule a first service; sending the first DCI by the network-side device in a Discontinuous Reception (DRX) On duration and/or a DRX Off duration.

The first DCI is scrambled by using a dedicated identifier related to the first service.

The method further includes: configuring, by the network-side device for the first DCI, a first search space set in the DRX On duration and/or a second search space set in the DRX Off duration; wherein the first search space set and the second search space set are same or different.

The method further includes: sending first indication information to a terminal by the network-side device, wherein the first indication information is configured to indicate at least one of following: that the terminal skips monitoring and/or sleeps in the DRX On duration; and that the terminal skips monitoring and/or sleeps in the DRX Off duration.

The method further includes: configuring monitoring position information of the first DCI by the network-side device, wherein the monitoring position information of the first DCI includes at least one of following: first monitoring position information of the first DCI in the DRX On duration; second monitoring position information of the first DCI in the DRX Off duration.

Configuring the monitoring position information of the first DCI by the network-side device includes at least one of following: semi-statically configuring the monitoring position information through high-layer signaling by the network-side device; dynamically configuring the monitoring position information through first information by the network-side device.

The monitoring position information configured semi-statically includes: a monitoring window and/or monitoring start position information of the first DCI.

The monitoring position information semi-statically configured includes at least one of following: position information associated with first behavior; independent monitoring position information.

The method further includes: sending second indication information to the terminal by the network-side device, wherein the second indication information is configured to indicate the first service.

The dedicated identifier related to the first service includes at least one of following: a dedicated identifier corresponding to a service type of the first service; a dedicated identifier corresponding to a first data stream of the first service.

The method further includes: sending third indication information to a terminal by the network-side device, wherein the third indication information is configured to indicate whether the terminal monitors the first DCI in the DRX On duration and/or the DRX Off duration.

The third indication information is carried by at least one of following signaling: layer 1 signaling; Media Access Control Control Element (MAC CE); high-layer signaling.

The embodiments of the present disclosure further provide a data transmission method. The method includes: receiving first Downlink Control Information (DCI) sent by a network-side device in a Discontinuous Reception (DRX) On duration and/or a DRX Off duration by a terminal; wherein the first DCI is configured to schedule a first service; monitoring the first DCI in the DRX On duration and/or the DRX Off duration by the terminal.

The first DCI is scrambled by using a dedicated identifier related to the first service.

Monitoring the first DCI in the DRX On duration and/or the DRX Off duration by the terminal includes: monitoring the first DCI in the DRX On duration by the terminal according to a first search space set configured by the network-side device; and/or monitoring the first DCI in the DRX Off duration by the terminal according to a second search space set configured by the network-side device, wherein the first search space set and the second search space set are same or different.

The method further includes: receiving, by the terminal, first indication information sent by the network-side device, wherein the first indication information is configured to indicate at least one of following: that the terminal skips monitoring and/or sleeps in the DRX On duration; that the terminal skips monitoring and/or sleeps in the DRX Off duration.

The method further includes: monitoring the first DCI by the terminal according monitoring position information of the first DCI, wherein the monitoring position information of the first DCI includes at least one of following: first monitoring position information of the first DCI in the DRX On duration; second monitoring position information of the first DCI in the DRX Off duration.

The monitoring position information of the first DCI is pre-configured by the network-side device or predefined by a protocol.

The method further includes at least one of following: receiving, by the terminal, the monitoring position information semi-statically configured through high-layer signaling by the network-side device; and/or receiving, by the terminal, the monitoring position information dynamically configured according to first information by the network-side device.

The monitoring position information configured semi-statically includes: a monitoring window and/or monitoring start position information of the first DCI.

The monitoring position information semi-statically configured includes at least one of following: position information associated with first behavior; independent monitoring position information.

The method further includes receiving, by the terminal, second indication information sent by the network-side device, wherein the second indication information is configured to indicate the first service.

The dedicated identifier related to the first service includes at least one of following: a dedicated identifier corresponding to a service type of the first service; a dedicated identifier corresponding to a first data stream of the first service.

The method further includes: receiving, by the terminal, third indication information sent by the network-side device, wherein the third indication information is configured to indicate whether the terminal monitors the first DCI in the DRX On duration and/or the DRX Off duration.

The third indication information is carried by at least one of following: layer 1 signaling; Media Access Control Control Element (MAC CE); high-layer signaling.

The embodiments of the present disclosure further provide a data transmission apparatus. The apparatus includes: a generation unit, configured to generate first Downlink Control Information (DCI), wherein the first DCI is configured to schedule a first service; a first sending unit, configured to send the first DCI in a Discontinuous Reception (DRX) On duration and/or a DRX Off duration.

The embodiments of the present disclosure provide a network-side device. The device includes: a memory, a transceiver, and a processor, wherein the memory is configured to store a computer program; the transceiver is configured to send and receive data under control of the processor; and the processor is configured to read the computer program in the memory and execute the following operations: generating first Downlink Control Information (DCI), wherein the first DCI is configured to schedule a first service; sending the first DCI in a Discontinuous Reception (DRX) On duration and/or a DRX Off duration.

The first DCI is scrambled by using a dedicated identifier related to the first service.

The processor is further configured to read a computer program in the memory and perform the following operations: configuring, for the first DCI, a first search space set in the DRX On duration and/or a second search space set in the DRX Off duration; wherein the first search space set and the second search space set are same or different.

The processor is further configured to read the computer program in the memory and perform the following operations: sending first indication information to a terminal, wherein the first indication information is configured to indicate at least one of the following: that the terminal skips monitoring and/or sleeps in the DRX On duration; that the terminal skips monitoring and/or sleeps in the DRX Off duration.

The processor is further configured to read the computer program in the memory and perform the following operations: configuring monitoring position information of the first DCI, wherein the monitoring position information of the first DCI includes at least one of following: first monitoring position information of the first DCI in the DRX On duration; second monitoring position information of the first DCI in the DRX Off duration.

The processor is further configured to read the computer program in the memory and perform the following operations: semi-statically configuring the monitoring position information through high-layer signaling; and/or dynamically configuring the monitoring position information through first information.

The monitoring position information configured semi-statically includes: a monitoring window and/or monitoring start position information of the first DCI.

The monitoring position information semi-statically configured includes at least one of following: position information associated with first behavior; independent monitoring position information.

The processor is further configured to read the computer program in the memory and perform the following operations: sending second indication information to the terminal, wherein the second indication information is configured to indicate the first service.

The dedicated identifier related to the first service includes at least one of following: a dedicated identifier corresponding to a service type of the first service; a dedicated identifier corresponding to a first data stream of the first service.

The processor is further configured to read the computer program in the memory and perform the following operations: sending third indication information to the terminal, wherein the third indication information is configured to indicate whether the terminal monitors the first DCI in the DRX On duration and/or the DRX Off duration.

The third indication information is carried by at least one of following signaling: layer 1 signaling; Media Access Control Control Element (MAC CE); high-layer signaling.

The embodiments of the present disclosure further provide a data transmission apparatus. The apparatus includes: a first receiving unit, configured to receive first Downlink Control Information (DCI) sent by a network-side device in a Discontinuous Reception (DRX) On duration and/or a DRX Off duration; wherein the first DCI is configured to schedule a first service; a first monitoring unit, configured to monitor the first DCI in the DRX On duration and/or the DRX Off duration.

The embodiments of the present disclosure further provide a terminal. The terminal includes: a memory, a transceiver, and a processor, wherein the memory is configured to store a computer program; the transceiver is configured to send and receive data under control of the processor; and the processor is configured to read the computer program in the memory and perform following operations: receiving first Downlink Control Information (DCI) sent by a network-side device in a Discontinuous Reception (DRX) On duration and/or a DRX Off duration; wherein the first DCI is configured to schedule a first service; monitoring the first DCI in the DRX On duration and/or the DRX Off duration.

Optionally, the first DCI is scrambled by using a dedicated identifier related to the first service.

Optionally, the processor is further configured to read the computer program in the memory and perform following operations: monitoring the first DCI in the DRX On duration according to a first search space set configured by the network-side device; and/or monitoring the first DCI in the DRX Off duration according to a second search space set configured by the network-side device, wherein the first search space set and the second search space set are e same or different.

The processor is further configured to read the computer program in the memory and perform the following operations: receiving first indication information sent by the network-side device, wherein the first indication information is configured to indicate at least one of following: that the terminal skips monitoring and/or sleeps in the DRX On duration; that the terminal skips monitoring and/or sleeps in the DRX Off duration.

The processor is further configured to read the computer program in the memory and perform the following operations: monitoring the first DCI according monitoring position information of the first DCI, wherein the monitoring position information of the first DCI includes at least one of following: first monitoring position information of the first DCI in the DRX On duration; second monitoring position information of the first DCI in the DRX Off duration.

The monitoring position information is pre-configured by the network-side device or predefined by a protocol.

The processor is further configured to read the computer program in the memory and execute the following operations: receiving the monitoring position information semi-statically configured through high-layer signaling by the network-side device; and/or receiving the monitoring position information dynamically configured according to first information by the network-side device.

The monitoring position information configured semi-statically includes: a monitoring window and/or monitoring start position information of the first DCI.

The monitoring position information semi-statically configured includes at least one of the following: position information associated with first behavior; independent monitoring position information.

The processor is further configured to read the computer program in the memory and perform the following operations: receiving second indication information sent by the network-side device, wherein the second indication information is configured for indicating the first service.

The dedicated identifier related to the first service includes at least one of following: a dedicated identifier corresponding to a service type of the first service; a dedicated identifier corresponding to a first data stream of the first service.

The processor is further configured to read the computer program in the memory and perform following operations: receiving third indication information sent by the network-side device, wherein the third indication information is configured to indicate whether the terminal monitors the first DCI in the DRX On duration and/or the DRX Off duration.

The third indication information is carried by at least one of following: layer 1 signaling; Media Access Control Control Element (MAC CE); high-layer signaling.

The embodiments of the present disclosure provide a processor-readable storage medium, wherein the processor-readable storage medium stores a computer program, wherein the computer program is configured to cause a processor to execute the method described above.

The embodiments of the present disclosure provide a chip, wherein the chip includes a processor and a communication interface coupled to the processor, wherein the processor is configured to execute a program or an instruction to execute the method described above.

The embodiments of the present disclosure provide a computer program product, wherein the computer program product is stored in a non-transitory storage medium, the computer program product is configured to be executed by at least one processor to implement the method described above.

The above technical solutions of the present disclosure have at least the following beneficial effects.

In the data transmission method of the embodiments of the present disclosure, the network-side device generates the first DCI for scheduling a first service, and sends the first DCI to the terminal in the DRX On duration and/or the DRX Off duration, the first DCI is DCI used for scheduling the first service, and the network-side device configures dedicated data transmission information for the terminal, and sends the first DCI to the terminal in the DRX On duration and/or the DRX Off duration, so that the terminal can monitor the first DCI in a Discontinuous Reception (DRX) On duration and/or the DRX Off duration. In this way, the terminal can perform corresponding DCI monitoring for data dynamic scheduling according to service characteristics without being limited by the DRX mechanism, thereby solving the problem that it is difficult to match the DRX cycle configuration with a specific service since comprehensive influence of multiple services needs to be considered for the DRX parameter configuration, and unnecessary transmission delay is introduced, and an effect is achieved that discontinuous reception of other services can also be ensured.

**BRIEF DESCRIPTION OF THE DRAWINGS**

FIG. 1 shows a block diagram of a wireless communication system;

FIG. 2 is a first schematic flowchart of a data transmission method according to an embodiment of the present disclosure;

FIG. 3 is a second schematic flowchart of a data transmission method according to an embodiment of the present disclosure;

FIG. 4 is a first schematic structural diagram of a data transmission apparatus according to an embodiment of the present disclosure;

FIG. 5 is a schematic structural diagram of a network-side device according to an embodiment of the present disclosure;

FIG. 6 is a second schematic structural diagram of a data transmission apparatus according to an embodiment of the present disclosure;

FIG. 7 is a schematic structural diagram of a terminal according to an embodiment of the present disclosure.

**DETAILED DESCRIPTION**

In order to make the technical problems, technical solutions to be solved by the present disclosure, and advantages more apparent, the following describes in detail the accompanying drawings and specific embodiments.

In the embodiments of the present disclosure, the term "and/or" describes association relationship of associated objects, and indicates that there may be three relationships, for example, A and/or B may indicate that A exists alone, A and B exist at the same time, and B exists alone. The character "/" generally indicates that the associated objects have "or" relationship.

In the embodiments of the present disclosure, the term "a plurality of" means two or more, and other quantifiers are similar to the term.

The technical solutions in the embodiments of the present disclosure will be clearly and completely described below with reference to the accompanying drawings in the embodiments of the present disclosure. Obviously, the described embodiments are merely some embodiments, rather than all embodiments, of the present disclosure. All other embodiments obtained by a person of ordinary skill in the art based on the embodiments of the present disclosure without creative efforts shall fall within the protection scope of the present disclosure.

The technical solutions provided in the embodiments of the present disclosure may be applied to various systems, especially 5G systems. For example, the applicable system may be a Global System of Mobile Communication (GSM) system, a Code Division Multiple Access (CDMA) system, a Wideband Code Division Multiple Access (WCDMA) system, a General Packet Radio Service (GPRS) system, a Long Term Evolution (LTE) system, an LTE Frequency Division Duplex (FDD) system, an LTE Time Division Duplex (TDD) system, a Long Term Evolution Advanced (LTE-A) system, a Universal Mobile Telecommunication System (UMTS), Worldwide Interoperability for Microwave Access (WiMAX) systems, 5G New Radio (NR) systems, and the like. Each system includes a terminal device and a network-side device, and may further include a core network portion, such as an Evolved Packet System (EPS), a 5G system (5 GS), etc.

The terminal according to the embodiments of the present disclosure may be a device for providing voice and/or data connectivity to a user, a handheld device having a wireless connection function, or other processing devices connected to a wireless modem, etc. In different systems, names of the terminal may also be different, for example, in a 5G system, the terminal may be referred to as a User Equipment (UE). A wireless terminal device may communicate with one or more core networks (CN) via a radio access network (RAN), the wireless terminal device may be a mobile terminal device, such as a mobile phone (or referred to as a "cellular" phone) and a computer with a mobile terminal device, for example, may be a portable mobile device, a pocket mobile device, a handheld mobile device, a computer built-in mobile device or a vehicle-mounted mobile device that exchanges language and/or data with the radio access network. For example, devices such as a Personal Communication Service (PCS) phone, a cordless telephone, a Session Initiation Protocol (SIP) phone, a Wireless Local Loop (WLL) station, a Personal Digital Assistant (PDA), etc. The wireless terminal device may also be referred to as a system, a subscriber unit, a subscriber station, a mobile station, a mobile set, a remote station, an access point, a remote terminal, an access terminal, a user terminal, a user agent, and a user device, which are not limited in the embodiments of the present disclosure.

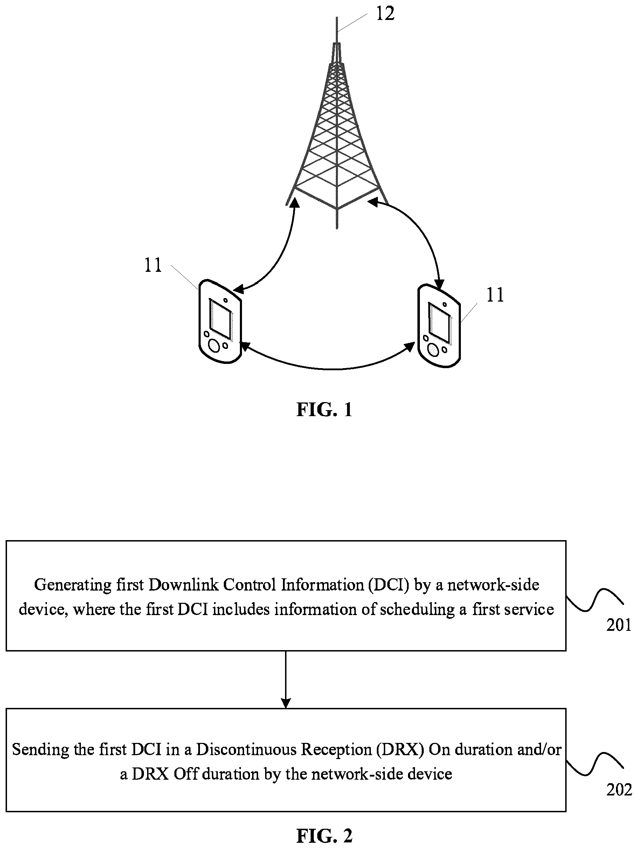

FIG. 1 is a block diagram of a wireless communication system according to an embodiment of the present disclosure. The wireless communication system includes a terminal device 11 and a network-side device 12, where the terminal device 11 may also be referred to as a terminal or a User Equipment (UE). It should be noted that the specific type of the terminal 11 is not limited in the embodiments of the present disclosure. The network-side device 12 may be a base station or a core network, and it should be noted that in the embodiments of the present disclosure, only the base station in the NR system is used as an example, but the specific type of the base station is not limited.

The data transmission method, the data transmission apparatus, the network-side device, and the terminal provided in the embodiments of the present disclosure are described hereinafter in detail with reference to the accompanying drawings and specific embodiments and application scenarios thereof.

As shown in FIG. 2, FIG. 2 is a schematic flowchart diagram of a data transmission method according to an embodiment of the present disclosure, the method includes steps 201-202.

Step 201: generating first Downlink Control Information (DCI) by a network-side device, where the first DCI is configured to schedule a first service.

Step 202: sending the first DCI in a Discontinuous Reception (DRX) On duration and/or a DRX Off duration by the network-side device.

In the data transmission method of the embodiments of the present disclosure, the network-side device generates the first DCI for scheduling a first service, and sends the first DCI to the terminal in the DRX On duration and/or the DRX Off duration, the first DCI is DCI used for scheduling the first service, and the network-side device configures dedicated data transmission information for the terminal, and sends the first DCI to the terminal in the DRX On duration and/or the DRX Off duration, so that the terminal can monitor the first DCI in a Discontinuous Reception (DRX) On duration and/or the DRX Off duration. In this way, the terminal can perform corresponding Downlink Control Information (DCI) monitoring according to service characteristics without being limited by the DRX mechanism, thereby solving the problem that it is difficult to match the DRX cycle configuration with a specific service due to comprehensive influence of multiple services on the DRX parameter configuration, and unnecessary transmission delay is introduced, and achieving an effect that discontinuous reception of other services can also be ensured.

It should be noted that the first DCI may include scheduling information of the first service, or may not include scheduling information of the first service, and whether the first DCI includes scheduling information depends on an arrival condition of the first service.

Optionally, the first DCI is scrambled by using a dedicated identifier related to the first service.

In this optional implementation, the dedicated identifier related to the first service may be RNTI dedicated to a service, such as an X-RNTI, and is used for a detection identifier of service transmission. Monitoring the DCI scrambled by the service identifier RNTI is not influenced by DRX, that is, in the DRX Off duration, the terminal can still perform monitoring of the first DCI. In this way, the network-side device configures dedicated data transmission information for the terminal, and the terminal can perform corresponding DCI monitoring of data dynamic scheduling according to service characteristics without being limited by the DRX mechanism, thereby avoiding the problem that unnecessary wait transmission delay is introduced due to the fact that it is difficult for the DRX cycle configuration to match with a specific service.

Further, as an optional implementation, the method further includes:

configuring, for the first DCI by the network-side device, a first search space set in a DRX On duration and/or a second search space set in a DRX Off duration; wherein the first search space set and the second search space set are same or different.

Here, it should be noted that, on the basis that the network-side device configures the first search space set in the DRX On duration and/or the second search space set in the DRX Off duration for the first DCI, the terminal may only use the first search space set to monitor the first DCI in the DRX On duration, or the terminal may only use the second search space set to monitor the first DCI in the DRX Off duration, or the terminal monitors the first DCI by using the first search space set configured by the network-side device in the DRX On duration, and monitors the first DCI by using the second search space set configured by the network-side device in the DRX Off duration.

Here, it should also be noted that in the case that the network-side device configures the first search space set and the second search space for the first DCI, the terminal may monitor the first DCI in the DRX On duration and the DRX Off duration by using the same or different search space sets, wherein search space set parameters may include monitoring periodicity, a Band-Width Part (BWP), an Aggregation Level (AL), the number of sending/receiving antennas, the number of transmitting/receiving layers, maximum layer data of the number of transmitting/receiving layers, and the like, but is not limited thereto. A specific example of configuring a plurality of search space sets for the first DCI by the network-side device is as follows:

Example 1: the network-side device configures a plurality of sets of search space set parameters for the DCI (the first DCI) scrambled by the X-RNTI, for example, the search space sets configured by the network-side device for the DRX On duration and the DRX Off duration are a search space set 1 and a search space set 2, in this way, in the DRX On duration, the terminal uses the search space set 1 to monitor the DCI (the first DCI) scrambled by the X-RNTI, and in the DRX Off duration, the terminal uses the search space set 2 to monitor the DCI (the first DCI) scrambled by the X-RNTI.

Example 2: the network-side device may configure a search space set for the DCI (the first DCI) scrambled by the X-RNTI, and configure a plurality of sets of parameters in the set of search space sets. Here, taking monitoring periodicity as an example, monitoring periodicity 1 and monitoring periodicity 2 corresponding to the DRX On duration and the DRX Off duration respectively are configured in the search space set of the DCI (first DCI) scrambled by the X-RNTI, and the monitoring periodicity 1 is less than the monitoring periodicity 2, so that relatively sparse monitoring behavior can be configured in the DRX Off duration.

Here, it should also be noted that a configuration method of the first DCI may be the same as the search space set configuration method of the related DCI, and method of configuring the at least one search space set by the network-side device for the first DCI may also be adopted, from the energy-saving perspective of the terminal. The search space set configuration method of the related DCI is as follows:

The network-side device allocates one or more search spaces to a user through system messages, configuration of each search space is periodic, and the terminal performs DCI detection in the configured search space. The time when the terminal performs DCI detection each time is referred to as a DCI monitoring occasion. The search space is generally periodically configured; in a 5G NR system, in order to obtain downlink scheduling information, the terminal needs to monitor DCI at each DCI monitoring occasion to determine whether there is downlink scheduling information, each process of monitoring DCI is a DCI decoding process, and then according to a Cyclic Redundancy Check (CRC) check result, the DCI carrying the scheduling information of the UE is determined. If the DCI has scheduling information of the terminal, the UE may obtain a positive CRC check, and may obtain scheduling information carried in the DCI; otherwise, the CRC check is negative, and the UE cannot obtain any information in the DCI.

Configuration parameters of the DCI are as follow:

a search space set index, that is, Search Space ID;
a control resource set identifier for establishing relationship between a search space S and a control resource set P, that is, a CORESET ID;
a DCI monitoring periodicity $k_{p,s}$ and an offset value $o_{p,s}$, wherein units of the DCI monitoring periodicity and the offset value are all slots, and the terminal determines, according to the configuration parameter, a slot in which DCI is monitored;
a monitoring pattern of DCI in a slot;

$$M_{p,s}^{(L)}$$

the number $M_{p,s}^{(L)}$ of DCI candidates included in each aggregation level in the search space, wherein the supported aggregation levels include {1 2 4 8 16}, and are configured by means of independent parameters;
a flag SearchSpace Type configured to distinguish whether the current search space is a common search space or a search space dedicated to a terminal.

In this optional implementation, the network-side device configures the at least one search space set for the first DCI, so that the terminal can monitor the first DCI in the DRX On duration or the DRX Off duration by using the configured search space set, or monitor the first DCI by using the same search space set or different search space sets in the DRX On duration and the DRX Off duration, so that the corresponding DCI monitoring for data dynamic scheduling is performed according to the service characteristics without being limited by the DRX mechanism, and unnecessary wait time delay is prevented and transmission of other services is also not affected.

Further, as an optional implementation, the method further includes:
sending first indication information to a terminal by the network-side device, where the first indication information is configured to indicate at least one of the following:

that the terminal skips monitoring and/or sleeps in a DRX On duration; and
that the terminal skips monitoring and/or sleeps in a DRX Off duration.

Here, it should be noted that the first indication information may be carried in the first DCI, or may be carried by other signaling that can be received in the DRX Off period, such as layer 1 signaling, an energy-saving signal, Media Access Control (MAC) layer signaling, and high-layer signaling, and the like. When the first indication information is carried in other signaling other than the first DCI, a sequence of sending the first indication information and sending the first DCI by the network-side device is not absolute, the first DCI and the first indication information may be sent at the same time, or the first indication information may be sent before sending the first DCI, or the first indication information may be sent after sending the first DCI.

Here, it should be noted that the first indication information is information indicating energy-saving of the terminal, and the network-side device may instruct, through the first indication information, the terminal to subsequently skip monitoring and/or sleep in the DRX On duration, or the network-side device instructs the terminal to subsequently skip monitoring and/or sleep by using at least one signaling of the first DCI, the layer 1 signaling, the energy saving signal, the MAC layer signaling, and the high-layer signaling including the first indication information, to indicate the terminal to perform discontinuous behavior of monitoring the first DCI, thereby reducing the wait delay of the first service while saving certain power consumption.

Here, it should be further noted that, when the first indication information indicates that the terminal skips monitoring and/or sleep in the DRX On duration, the content indicated by the first indication information may specifically be at least one of the following:

that the terminal skips monitoring and/or sleeps in the monitoring occasion of the current monitoring window or the DRX Off duration, that is, the terminal skips monitoring and/or sleeps in the remaining monitoring occasion in the current monitoring window;
that the terminal skips monitoring and/or sleeps at a configured remaining monitoring position in the current DRX On duration.

When the first indication information indicates that the terminal skips monitoring and/or sleeps in the DRX Off duration, the content indicated by the first indication information may specifically be at least one of the following:

that the terminal skips monitoring and/or sleeps in the monitoring occasion of the current monitoring window or the DRX Off duration, that is, the terminal skips monitoring and/or sleeps in the monitoring occasion of the current monitoring window or the DRX Off duration;
that the terminal skips monitoring and/or sleeps in the remaining monitoring occasions of the current monitoring window; and
that the terminal skips monitoring and/or sleeps in the remaining monitoring positions configured in the current DRX Off duration.

Further, as an optional implementation, the method further includes: configuring monitoring position information of the first DCI by the network-side device, where the monitoring position information of the first DCI includes at least one of the following:

first monitoring position information of the first DCI in the DRX On duration;
second monitoring position information of the first DCI in the DRX Off duration.

Here, it should be noted that the first monitoring position information and the second monitoring position information may be the same or different.

Here, it should also be noted that the first DCI may be scrambled by using C-RNTI, or scrambled by using a dedicated identifier related to the first service. In the DRX On duration, the terminal may monitor the first DCI according to the first monitoring position information and/or the first search space set configured by the network-side device; and in the DRX Off duration, the terminal may monitor the first DCI according to the second monitoring position information and/or the second search space set configured by the network-side device.

In this optional implementation, the network-side device configures the monitoring position information of the first DCI, so that the terminal can monitor the first DCI according to the monitoring position information of the first DCI, so that the terminal can perform corresponding DCI monitoring for data dynamic scheduling according to the service characteristics without being limited by the DRX mechanism. The problem is solved that unnecessary wait transmission delay is introduced due to the fact that it is difficult for the DRX periodic configuration to be matched with a specific service since comprehensive influence of a plurality of services needs to be considered for the DRX parameter configuration at present, and meanwhile, discontinuous reception of other services can be ensured.

In an optional implementation, configuring the monitoring position information of the first DCI by the network-side device includes at least one of the following:

semi-statically configuring the monitoring position information through high-layer signaling by the network-side device;

dynamically configuring the monitoring position information through first information by the network-side device.

In this optional implementation, the network-side device dynamically configures the monitoring position information through the first information, so that the monitoring position of the first DCI is dynamically adjusted. Specific details are given as follow.

The network-side device may configure the monitoring position information dedicated to a first service in the DRX Off duration, and the network-side device configures the first information for the terminal, the first information is configured for instructing a time duration for which the terminal continues monitoring after the DCI dedicated to a service is monitored. The first information may be carried by the layer 1 signaling or the MAC signaling or the high-layer signaling, for example, the first information may be a monitoring timer or a duration, or may be indication signaling information, or may be a reference signal. Taking the monitoring timer as an example, when the monitoring timer does not expire, the terminal may continue to perform the monitoring of the DCI (first DCI) dedicated to the service. When data transmission is performed at the end of the monitoring window due to delay jitter of a service data packet, the data packet can only be transmitted in a next monitoring window or a next monitoring occasion since there is no subsequent monitoring occasion, and the configuring the monitoring timer is beneficial to reducing the transmission delay caused by the delay jitter.

Optionally, when the network-side device completes data transmission, the terminal is instructed to skip monitoring or to sleep through the first indication information.

In a specific implementation, the monitoring position information configured semi-statically includes: a monitoring window and/or monitoring start position information of the first DCI.

That is to say, the monitoring position information semi-statically configured may include a monitoring window for monitoring the first DCI, and/or include a monitoring start position of monitoring the first DCI.

In an optional implementation, the monitoring position information semi-statically configured includes at least one of the following:

position information associated with first behavior;
independent monitoring position information.

Here, it should be noted that the first behavior may be a periodic behavior or a semi-persistent behavior or an aperiodic behavior, where the periodic behavior or semi-persistent behavior includes at least one of the following:

Channel State Information (CSI) measurement;

Radio Resource Management (RRM) measurement;

Radio Link Monitoring (RLM);

a slot where a Semi-Persistent Scheduling Physical Downlink Shared Channel (SPS PDSCH) is located;

a slot where Hybrid Automatic Repeat Request Acknowledgement (HARQ-ACK) feedback of a SPS PDSCH is located;

starting time or expiration time of a Round Trip Time (RTT) timer of the SPS PDSCH;

a start position/an end position of a DRX cycle;

a start position/an end position of the DRX On duration;

a reference signal, where the reference signal includes at least one of the following: a synchronization signal block (Synchronization Signal and PBCH Block, SSB); a Channel State Information Reference Signal (CSI-RS); Tracking Reference Signal (TRS).

The aperiodic behavior includes at least one of the following: a downlink signaling; CSI measurement; a reference signal, such as CSI-RS, TRS, etc.

Here, it should be noted that, the semi-persistent behavior is periodic behavior within a period of time; and granularity of a reference time point for determining the monitoring position information of the first DCI may be a slot or a symbol, or may be millisecond.

Here, it should also be noted that the independent monitoring position information refers to the monitoring position information directly obtained without depending on any other information.

The independent monitoring position information includes at least one of the following:

monitoring periodicity and a first offset value; an absolute start time of a monitoring window; a monitoring duration; monitoring end time; a time offset between adjacent monitoring windows; the number of monitoring windows; the number of the monitoring start positions.

Specifically, the independent monitoring position information of the first DCI in the DRX On duration includes at least one of the following:

monitoring periodicity and a first offset value; an absolute start time of the monitoring window; start time/end time and a second offset value of the periodic or semi-persistent behavior; a monitoring duration; monitoring end time; a time offset between adjacent monitoring windows; the number of first monitoring windows; the number of first monitoring start positions.

Specifically, the independent monitoring position information of the first DCI in the DRX Off duration includes at least one of the following:

monitoring periodicity and a first offset value; an absolute start time of the monitoring window; start time/end time and a second offset value of the periodic or semi-persistent behavior; a monitoring duration; monitoring end time; a time offset between adjacent monitoring windows; the number of second monitoring windows; the number of second monitoring start positions.

The method of configuring the monitoring position information of the first DCI by using the foregoing parameters is described in combination with specific examples as follows:

Example 1: the monitoring start time may be configured according to the monitoring periodicity and the first offset value (offset 1), for example, the start time satisfies the following conditions:

$$\left( n_f \cdot N_{slot}^{frame,\ \mu} + n_{s,\ f}^{\mu} - o_s \right) \bmod k_s = 0$$,

wherein $n_f$ is a frame index, $n_{s,\ f}^{\mu}$ is a slot index under a subcarrier $\mu$; $N_{slot}^{frame,\ \mu}$ is the number of slots included in a sub-carrier $\mu$ in a next subframe, $k_s$ is monitoring periodicity, and $o_s$ is the first offset value. On this basis, if the monitoring duration is configured, then one or more monitoring windows may be determined; and the time offset $T_{offset}$ between adjacent monitoring windows and/or the monitoring starting positions/ the number of monitoring windows.

Example 2: a monitoring window is determined by configuring the absolute starting time $T_{start}$ and the monitoring final time $T_{final}$ or the monitoring duration of the monitoring window; that is, a monitoring window is determined according to the absolute starting time $T_{start}$ and the monitoring final time $T_{final}$ of the monitoring window, or a monitoring window is determined according to the absolute starting time $T_{start}$ and the monitoring duration of the monitoring window; based on the above, if the time offset $T_{offset}$ between adjacent monitoring windows and/or the monitoring start positions/the number of monitoring windows are configured, a plurality of monitoring windows may be determined.

Example 3: the monitoring window or the monitoring start position may use, as the monitoring start time, the second offset (offset2) of the start positon/end position of the periodic behavior or the semi-persistent behavior; and based on this, if the monitoring duration is configured, one or more monitoring windows may be determined; and a plurality of monitoring windows may also be determined in combination with configuring the time offset $T_{offset}$ between the adjacent monitoring windows and/or the monitoring start positions/the number of monitoring windows. Here, it should be noted that the second offset value may be an offset position after the start position of the periodic or semi-persistent behavior, or an offset position before the start position of the periodic or semi-persistent behavior, or an offset position after the end position of the periodic or semi-persistent behavior, or an offset position before the end position of the periodic or semi-persistent behavior.

Further, as an optional implementation, the method further includes: sending, by the network-side device, second indication information to the terminal, where the second indication information is used for indicating a first service.

That is, when the network-side device receives indication information of the first service sent by a core network, or the network-side device identifies that a downlink data service is indicated as the first service, the network-side device may notify, through second indication information, the terminal that the current service is the first service, that is: the second indication information is configured to indicate that the data transmission scheduled by the first DCI is the data transmission of the first service, so that the terminal can monitor the first DCI according to the pre-configured monitoring position information, the terminal can perform corresponding DCI monitoring of data dynamic scheduling according to the service characteristics without being limited by the DRX mechanism. In this way, the problem in the related art is addressed that it is difficult for the DRX cycle configuration to match with a specific service and an unnecessary wait transmission delay is caused, since comprehensive influence of a plurality of services needs to be considered for the DRX parameter configuration, and at the same time, discontinuous reception of other services can also be ensured.

In an optional implementation, the dedicated identifier related to the first service includes at least one of the following:

a dedicated identifier corresponding to a service type of the first service;
a dedicated identifier corresponding to a first data stream of the first service.

That is, in this optional implementation, the dedicated identifier related to the first service may be a dedicated identifier corresponding to the service type of the first service, that is, different service types correspond to different dedicated identifiers. The dedicated identifier of the first service may also be a dedicated identifier corresponding to different types of data streams of the same service, that is: in the same service, different data streams correspond to different dedicated identifiers, for example, the I frame, the P frame, and the B frame in a video streaming service respectively correspond to different dedicated identifiers, and when the core network may indicate different encoded data streams, the network-side device may configure the dedicated data flow identifier (a dedicated identifier corresponding to the encoded frame), such as an X-RNTI, etc. by using transmission priorities of the different encoded data streams.

Further, as an optional implementation, the method further includes:

sending third indication information to a terminal by the network-side device, where the third indication information is configured to indicate whether the terminal performs monitoring of the first DCI in a DRX On duration and/or a DRX Off duration.

Here, it should be noted that the third indication information is monitoring indication information dedicated to a service, that is, the third indication information sent by the network-side device may indicate whether the terminal performs monitoring of the first DCI in the DRX On duration and/or the DRX Off duration. In other words, the network-side device may send third indication information to the terminal according to a transmission situation of the first service, so as to notify the terminal whether to monitor the first DCI in the DRX On duration and/or the DRX Off duration, that is, when the network-side device configures at least one of at least one search space set, a monitoring window and a monitoring start position for the first DCI, the network-side device may also indicate, according to the transmission situation of the first service, whether the terminal uses the configured at least one of the at least one search space set, the monitoring window and the monitoring start position to monitor the first DCI, so as to save a certain power consumption and reduce the wait delay of the first service.

Specifically, as an optional implementation, the third indication information is carried by at least one of the following:

layer 1 signaling; Media Access Control Control Element (MAC CE); high-layer signaling.

In the case that the first signaling is the layer 1 signaling, when the network-side device determines that the current service is the first service, the network-side device enables the third indication information to be carried in scheduling DCI signaling/non-scheduling DCI signaling in the DRX On duration, the terminal is instructed to monitor the first DCI in the DRX On duration and/or the DRX Off duration; the third indication information may also be carried by means of the non-scheduling DCI signaling in the DRX Off duration, the terminal is instructed to monitor the first DCI in the DRX On duration and/or the DRX Off duration; and the third indication information may also be carried by means of the energy-saving signal in the DRX Off duration, the terminal is instructed to monitor the first DCI in the DRX On duration and/or the DRX Off duration.

In the case that the first signaling is the MAC CE, the network-side device may enable the third indication information to be carried in the MAC CE in the PDSCH in the DRX On duration, the terminal is instructed to monitor the first DCI in the DRX On duration and/or the DRX Off duration; the third indication information may also be carried by the SPS PDSCH in the DRX Off duration, the terminal is instructed to monitor the first DCI in the DRX On duration and/or the DRX Off duration.

In a case that the first signaling is the high-layer signaling, whether the terminal monitors the first DCI in the DRX On duration and/or the DRX Off duration may be indicated according to different values; for example, when the value is 1, the terminal is instructed to monitor the first DCI in the DRX Off duration, and when the value is 2 or default, the terminal is instructed to not monitor the first DCI in the DRX Off duration.

In the data transmission method of the embodiments of the present disclosure, the network-side device generates the first DCI for scheduling a first service, and sends the first DCI to the terminal in the DRX On duration and/or the DRX Off duration, the first DCI is DCI used for scheduling the first service, and the network-side device configures dedicated data transmission information for the terminal, and sends the first DCI to the terminal in the DRX On duration and/or the DRX Off duration, so that the terminal can monitor the first DCI in a Discontinuous Reception (DRX) On duration and/or the DRX Off duration. In this way, the terminal can perform corresponding Downlink Control Information (DCI) monitoring according to service characteristics without being limited by the DRX mechanism, thereby solving the problem that it is difficult to match the DRX cycle configuration with a specific service due to comprehensive influence of multiple services on the DRX parameter configuration, and unnecessary transmission delay is introduced, and achieving an effect that discontinuous reception of other services can also be ensured.

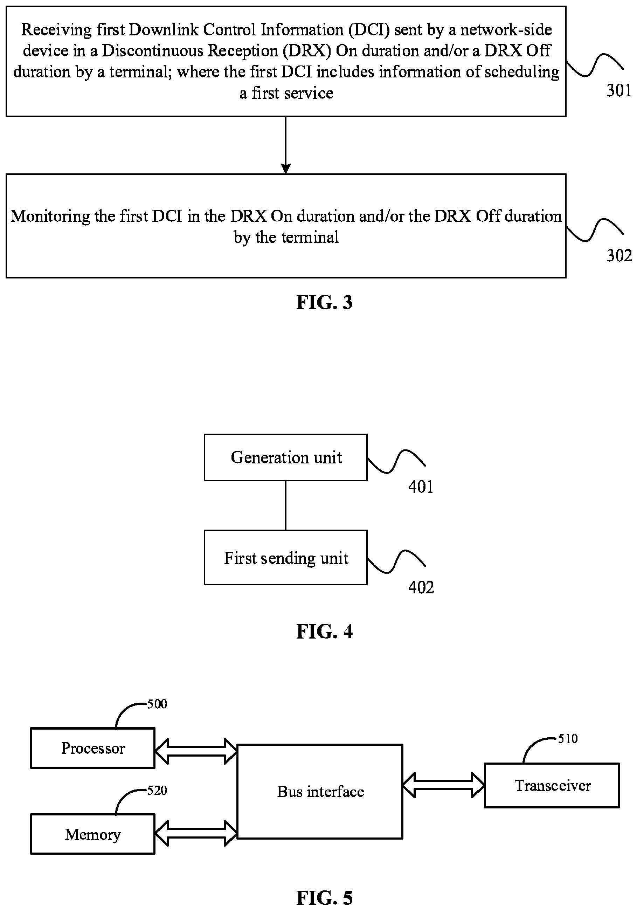

As shown in FIG. 3, FIG. 3 is a second schematic flowchart of a data transmission method according to an embodiment of the present disclosure, the method includes a step 301 and a step 302.

Step 301: receiving first Downlink Control Information (DCI) sent by a network-side device in a Discontinuous Reception (DRX) On duration and/or a DRX Off duration; where the first DCI is configured to schedule a first service.

Step 302: monitoring the first DCI in the DRX On duration and/or the DRX Off duration by the terminal.

According to the data transmission method of the embodiments of the present disclosure, the terminal receives the first DCI sent by the network-side device in the Discontinuous Reception (DRX) On duration and/or the DRX Off duration, the first DCI being used for scheduling the first service, and the terminal monitors the first DCI in the DRX On duration and/or the DRX Off duration. In this way, the terminal can perform corresponding Downlink Control Information (DCI) monitoring for data dynamic scheduling according to service characteristics without being limited by the DRX mechanism, thereby solving the problem that it is difficult to match the DRX cycle configuration with a specific service due to comprehensive influence of multiple services on the DRX parameter configuration, and unnecessary transmission delay is introduced.

In an optional implementation, the first DCI is scrambled by using a dedicated identifier related to the first service.

In this optional implementation, the dedicated identifier related to the first service may be RNTI dedicated to a service, such as an X-RNTI, and is used for a detection identifier of service transmission. Monitoring the DCI scrambled by the service identifier RNTI is not influenced by DRX, that is, in the DRX Off duration, the terminal can still perform monitoring of the first DCI. In this way, the network-side device configures dedicated data transmission information for the terminal, and the terminal can perform corresponding DCI monitoring of data dynamic scheduling according to service characteristics without being limited by the DRX mechanism, thereby avoiding the problem that unnecessary wait transmission delay is introduced due to the fact that it is difficult for the DRX cycle configuration to match with a specific service.

In an optional implementation, monitoring the first DCI in a DRX On duration and/or a DRX Off duration by the terminal includes:

> monitoring, by the terminal, the first DCI in a DRX On duration according to a first search space set configured by the network-side device; and/or
> monitoring, by the terminal, the first DCI in a DRX Off duration according to a second search space set configured by the network-side device.

The first search space set and the second search space set are the same or different.

Here, it should be noted that, on the basis that the network-side device configures the first search space set in the DRX On duration and/or the second search space set in the DRX Off duration for the first DCI, the terminal may only use the first search space set to monitor the first DCI in the DRX On duration, or the terminal may only use the second search space set to monitor the first DCI in the DRX Off duration, or the terminal monitors the first DCI by using the first search space set configured by the network-side device in the DRX On duration, and monitors the first DCI by using the second search space set configured by the network-side device in the DRX Off duration.

Optionally, in the case that the network-side device configures the first search space set and the second search space for the first DCI, the terminal may monitor the first DCI in the DRX On duration and the DRX Off duration by using the same or different search space sets, wherein the monitoring of the first DCI in different search space sets can configure relatively sparse monitoring behavior in the DRX Off duration, so as to save certain power consumption.

Further, as an optional implementation, the method further includes:

receiving first indication information sent from the network-side device by the terminal, where the first indication information is configured to indicate at least one of the following:

> that the terminal skips monitoring and/or sleeps in a DRX On duration; and

that the terminal skips monitoring and/or sleeps in a DRX Off duration.

Here, it should be noted that the first indication information may be carried in the first DCI, or may be carried by other signaling that can be received in the DRX Off period, such as layer 1 signaling, an energy-saving signal, Media Access Control (MAC) layer signaling, and high-layer signaling, and the like. When the first indication information is carried in other signaling other than the first DCI, a sequence of sending the first indication information and sending the first DCI by the network-side device is not absolute, the first DCI and the first indication information may be sent at the same time, or the first indication information may be sent before sending the first DCI, or the first indication information may be sent after sending the first DCI.

Here, it should be noted that the first indication information is information indicating energy-saving of the terminal, and the network-side device may instruct, through the first indication information, the terminal to subsequently skip monitoring and/or sleep in the DRX On duration, or the network-side device instructs the terminal to subsequently skip monitoring and/or sleep by using at least one signaling of the first DCI, the layer 1 signaling, the energy saving signal, the MAC layer signaling, and the high-layer signaling including the first indication information, to indicate the terminal to perform discontinuous behavior of monitoring the first DCI, thereby reducing the wait delay of the first service while saving certain power consumption.

Here, it should be further noted that, when the first indication information indicates that the terminal skips monitoring and/or sleeps in the DRX On duration, the content indicated by the first indication information may specifically be at least one of the following:

> that the terminal skips monitoring and/or sleeps in the monitoring occasion of the current monitoring window or the DRX Off duration, that is, the terminal skips monitoring and/or sleeps in the remaining monitoring occasion in the current monitoring window;
> that the terminal skips monitoring and/or sleeps at a configured remaining monitoring position in the current DRX On duration.

When the first indication information indicates that the terminal skips monitoring and/or sleeps in the DRX Off duration, the content indicated by the first indication information may specifically be at least one of the following:

> that the terminal skips monitoring and/or sleeps in the monitoring occasion of the current monitoring window or the DRX Off duration, that is, the terminal skips monitoring and/or sleeps in the monitoring occasion of the current monitoring window or the DRX Off duration;

that the terminal skips monitoring and/or sleeps in the remaining monitoring occasions of the current monitoring window; and
that the terminal skips monitoring and/or sleeps in the remaining monitoring positions configured in the current DRX Off duration.

In this optional implementation, the content is indicated by the first indication information may enable the terminal to perform discontinuous behavior of monitoring the first DCI, thereby saving a certain power consumption and reducing the waiting delay of the first service.

Further, as an optional implementation, the method further includes:
monitoring the first DCI by the terminal according monitoring position information of the first DCI, where the monitoring position information of the first DCI includes at least one of the following:

first monitoring position information of the first DCI in the DRX On duration;
second monitoring position information of the first DCI in the DRX Off duration.

Here, it should also be noted that the first DCI may be scrambled by using C-RNTI, or scrambled by using a dedicated identifier related to the first service. In the DRX On duration, the terminal may monitor the first DCI according to the first monitoring position information and/or the first search space set configured by the network-side device; and in the DRX Off duration, the terminal may monitor the first DCI according to the second monitoring position information and/or the second search space set configured by the network-side device.

In this optional implementation, the terminal monitors the first DCI according to the first monitoring position information in the DRX On duration and/or, monitors the first DCI according to the second monitoring position information in the DRX Off duration, so that the terminal can perform corresponding DCI monitoring for data dynamic scheduling according to the service characteristics without being limited by the DRX mechanism. The problem is solved that unnecessary wait transmission delay is introduced due to the fact that it is difficult for the DRX cycle configuration to be matched with a specific service since comprehensive influence of a plurality of services needs to be considered for the DRX parameter configuration at present, and meanwhile, discontinuous reception of other services can be ensured.

In an optional implementation, the monitoring position information of the first DCI is pre-configured by the network-side device or predefined by a protocol.

Further, as an optional implementation, the method further includes at least one of the following:

receiving, by the terminal, the monitoring position information semi-statically configured through high-layer signaling by the network-side device;
receiving, by the terminal, the monitoring position information dynamically configured according to first information by the network-side device.

Specifically, the monitoring position information configured semi-statically includes: a monitoring window and/or monitoring start position information of the first DCI.

Specifically, the monitoring position information semi-statically configured includes at least one of the following:

position information associated with first behavior;
independent monitoring position information.

Here, it should be noted that the first behavior may be a periodic behavior or a semi-persistent behavior or an aperiodic behavior, where the periodic behavior or semi-persistent behavior includes at least one of the following:

Channel State Information (CSI) measurement;
Radio Resource Management (RRM) measurement;
Radio Link Monitoring (RLM);
a slot where a Semi-Persistent Scheduling Physical Downlink Shared Channel (SPS PDSCH) is located;
a slot where Hybrid Automatic Repeat Request Acknowledgement (HARQ-ACK) feedback of a SPS PDSCH is located;
starting time or expiration time of a Round Trip Time (RTT) timer of the SPS PDSCH;
a start position/an end position of a DRX cycle;
a start position/an end position of the DRX On duration;
a reference signal, where the reference signal includes at least one of the following: a synchronization signal block (Synchronization Signal and PBCH Block, SSB); a Channel State Information Reference Signal (CSI-RS); Tracking Reference Signal (TRS).

The aperiodic behavior includes at least one of the following: a downlink signaling; CSI measurement; a reference signal, such as CSI-RS, TRS, etc.

Here, it should be noted that, the semi-persistent behavior is periodic behavior within a period of time; and granularity of a reference time point for determining the monitoring position information of the first DCI may be a slot or a symbol, or may be millisecond.

Here, it should also be noted that the independent monitoring position information refers to the monitoring position information directly obtained without depending on any other information.

The independent monitoring position information includes at least one of the following:
monitoring periodicity and a first offset value; an absolute start time of a monitoring window; a monitoring duration;

monitoring end time; a time offset between adjacent monitoring windows; the number of monitoring windows; the number of the monitoring start positions.

Specifically, the independent monitoring position information of the first DCI in the DRX On duration includes at least one of the following:
monitoring periodicity and a first offset value; an absolute start time of the monitoring window; start time/end time and a second offset value of the periodic or semi-persistent behavior; a monitoring duration; monitoring end time; a time offset between adjacent monitoring windows; the number of first monitoring windows; the number of first monitoring start positions.

Specifically, the independent monitoring position information of the first DCI in the DRX Off duration includes at least one of the following:
monitoring periodicity and a first offset value; an absolute start time of the monitoring window; start time/end time and a second offset value of the periodic or semi-persistent behavior; a monitoring duration; monitoring end time; a time offset between adjacent monitoring windows; the number of second monitoring windows; the number of second monitoring start positions.

Further, as an optional implementation, the method further includes:
receiving, by the terminal, second indication information sent by the network-side device, where the second indication information is configured for indicating the first service.

In this optional implementation, the terminal can determine that the current service is the first service according to the second indication information, so that the terminal can monitor the first DCI according to the pre-configured monitoring position information, the terminal can perform corresponding DCI monitoring of data dynamic scheduling according to the service characteristics without being limited by the DRX mechanism. In this way, the problem in the related art is addressed that it is difficult for the DRX cycle configuration to match with a specific service and an unnecessary wait transmission delay is caused, since comprehensive influence of a plurality of services needs to be considered for the DRX parameter configuration, and at the same time, discontinuous reception of other services can also be ensured.

Here, it should be noted that, in the embodiments of the present disclosure, an application layer of the terminal may identify whether the current service is the first service, and when the current service is identified as the first service, the terminal may monitor the first DCI according to the pre-configured monitoring position information, so that the network-side device does not need to send the second indication information, to save signaling overhead.

Here, it should also be noted that, when the network-side device does not send the second indication information, but the application layer of the terminal identifies the current service, the original data transmission method may be used for data transmission before the application layer identifies the current service, for example, the initial data transmission starts with the DRX On duration.

In an optional implementation, the dedicated identifier related to the first service includes at least one of the following:

> a dedicated identifier corresponding to a service type of the first service;
> a dedicated identifier corresponding to a first data stream of the first service.

That is, in this optional implementation, the dedicated identifier related to the first service may be a dedicated identifier corresponding to the service type of the first service, that is, different service types correspond to different dedicated identifiers. The dedicated identifier of the first service may also be a dedicated identifier corresponding to different types of data of the same service, that is: in the same service, different data streams correspond to different dedicated identifiers, for example, the I frame, the P frame, and the B frame in a video streaming service respectively correspond to different dedicated identifiers, and when the core network may indicate different encoded data streams, the network-side device may configure the dedicated data stream identifier (a dedicated identifier corresponding to the encoded frame), such as an X-RNTI, etc. by using transmission priorities of the different encoded data streams.

Further, as an optional implementation, the method further includes:
receiving third indication information sent from the network-side device by the terminal, where the third indication information is configured to indicate whether the terminal performs monitoring of the first DCI in a DRX On duration and/or a DRX Off duration.

In this optional implementation, the network-side device indicates, by using the third indication information, whether the terminal monitors the first DCI in the DRX On duration and/or the DRX Off duration, that is, the network-side device may send the third indication information to the terminal according to the transmission situation of the first service, to notify the terminal whether to monitor the first DCI in the DRX On duration and/or the DRX Off duration, that is, when the network-side device configures at least one of at least one search space set, a monitoring window and a monitoring start position for the first DCI, the network-side device may also indicate, by using the third indication information according to the transmission situation of the first service, whether the terminal uses the configured at least one of the at least one search space set, the monitoring window and the monitoring start position to monitor the first DCI, so as to save a certain power consumption and reduce the wait delay of the first service.

In a specific implementation, the third indication information is carried by at least one of the following:
layer 1 signaling; Media Access Control Control Element (MAC CE); high-layer signaling.

In the case that the first signaling is the layer 1 signaling, when the network-side device determines that the current service is the first service, the network-side device enables the third indication information to be carried in scheduling DCI signaling/non-scheduling DCI signaling in the DRX On duration, the terminal is instructed to monitor the first DCI in the DRX On duration and/or the DRX Off duration; the third indication information may also be carried by means of the non-scheduling DCI signaling in the DRX Off duration, the terminal is instructed to monitor the first DCI in the DRX On duration and/or the DRX Off duration; and the third indication information may also be carried by means of the energy-saving signal in the DRX Off duration, the terminal is instructed to monitor the first DCI in the DRX On duration and/or the DRX Off duration.

In the case that the first signaling is the MAC CE, the network-side device may enable the third indication information to be carried in the MAC CE in the PDSCH in the DRX On duration, the terminal is instructed to monitor the first DCI in the DRX On duration and/or the DRX Off duration; the third indication information may also be carried by the SPS PDSCH in the DRX Off duration, the terminal is instructed to monitor the first DCI in the DRX On duration and/or the DRX Off duration.

In a case that the first signaling is the high-layer signaling, whether the terminal monitors the first DCI in the DRX On duration and/or the DRX Off duration may be indicated according to different values; for example, when the value is 1, the terminal is instructed to monitor the first DCI in the DRX Off duration, and when the value is 2 or default, the terminal is instructed to not monitor the first DCI in the DRX Off duration.

The specific implementation of the data transmission method in the embodiments of the present disclosure is described below with reference to specific examples.

Example 1: the first DCI is scrambled by using a dedicated identifier related to the first service, and the terminal may monitor the first DCI during the DRX On duration and the DRX Off duration.

A service identifier (a dedicated identifier of a first service) dedicated to a service is introduced as a detection identifier of service transmission, such as RNTI dedicated to a service, such as an X-RNTI, the DCI scrambled by the service identifier RNTI is not controlled by DRX, that is, in a DRX Off duration, the terminal can still perform corresponding DCI monitoring, and this example is described by taking an X-RNTI as an example.

Data scheduling on the service X (the first service) is performed through the DCI scheduled by the XRNTI, and the monitoring can be performed in both the DRX On duration and the DRX Off duration. Configuration method of the scheduling DCI may be the same as the related configuration method of a search space set of DCI, or at least one of the following methods may be used from the perspective of energy-saving of the terminal.

Method 1: a plurality of sets of search space set parameters, or multiple sets of parameter in one set of search space set parameters are configured for the DCI (the first DCI) scrambled by the X-RNTI. For example, in the DRX On duration, the terminal uses the search space set 1 to monitor the DCI scrambled by the X-RNTI, and in the DRX Off duration, the terminal uses the search space set 2 to monitor the DCI scrambled by the X-RNTI. The search space sets configured by the network-side device for the DRX On duration and the DRX Off duration are the search space set 1 and the search space set 2. As another example, monitoring periodicity 1 and monitoring periodicity 2 corresponding to the DRX On duration and the DRX Off duration respectively are configured in the search space set of the DCI scrambled by the X-RNTI, that is, the DCI scrambled by the X-RNTI is monitored in the DRX On duration by using the monitoring periodicity 1, the DCI scrambled by the X-RNTI is monitored in the DRX Off duration by using the monitoring periodicity 2. Relatively sparse monitoring behavior may be configured in the DRX Off duration.

Method 2: energy saving indication information (first indication information), such as indications of monitor-skipping and/or sleeping, of the terminal is carried in the DCI (first DCI) scrambled by X-RNTI. For example, indications of subsequent monitor-skipping and/or sleeping of the terminal may be provided in at least one signaling of the first DCI, the layer 1 signaling, the energy saving signal, the MAC layer signaling, and the high-layer signaling including the first indication information in the DRX On duration. In the DRX Off duration, at least one of the first DCI, the layer 1 signaling, the energy-saving signal, the MAC layer signaling, and the high-layer signaling including the first indication information may be used for indicating the terminal to perform a discontinuous PDCCH monitoring behavior, by indicating that the terminal subsequently skips monitoring and/or sleeps, thereby saving a certain power consumption and reducing the wait delay of the X service.

Here, it should be noted that the first DCI scrambled by using the C-RNTI may also be monitored by using the method in this example.

Here, it should also be noted that, implementation of monitoring the first DCI only in the DRX On duration is similar to implementation of monitoring the first DCI in the DRX On duration in this example.

Example 2: the first DCI is scrambled by using a dedicated identifier related to the first service, and the terminal may monitor the first DCI during the DRX Off duration.

A service identifier (a dedicated identifier of a first service) dedicated to a service is introduced as a detection identifier of service transmission, such as RNTI dedicated to a service, such as an X-RNTI, the DCI scrambled by the service identifier RNTI is not controlled by DRX, that is, in a DRX Off duration, the terminal can still perform corresponding DCI monitoring, and this example is described by taking an X-RNTI as an example.

Data scheduling on the service X (the first service) is performed through the DCI scheduled by the XRNTI, and monitoring of the DCI scrambled by X-RNTI can be performed in only the DRX Off duration. Search space configuration of the DCI (first DCI) scrambled by the X-RNTI is configured for the terminal by the network-side device. Specific parameters of the search space configuration may be same as the parameters of the search space set. However, considering that the DCI scrambled by the X-RNTI needs to be monitored in the DRX Off duration, the search space of the DCI scrambled by the X-RNTI may adopt at least one of the following methods from the perspective of energy-saving.

Method 1: a search space of DCI (first DCI) scrambled by X-RNTI is configured with monitoring periodicity of a larger value, where the larger value means that the monitoring periodicity in the DRX Off duration is greater than the monitoring periodicity in the DRX On duration.

Method 2: energy saving indication information (first indication information) of the terminal, for example, indications of monitor-skipping and/or sleeping, is carried in the DCI (first DCI) scrambled by the X-RNTI. For example, indications of subsequent monitor-skipping and/or sleeping of the terminal may be provided in at least one signaling of the first DCI, the layer 1 signaling, the energy saving signal, the MAC layer signaling, and the high-layer signaling including the first indication information in the DRX On duration. In the DRX Off duration, at least one of the first DCI, the layer 1 signaling, the energy-saving signal, the MAC layer signaling, and the high-layer signaling including the first indication information may be used for indicating the terminal to perform a discontinuous PDCCH monitoring behavior, by indicating that the terminal subsequently skips monitoring and/or sleeps, thereby saving a certain power consumption and reducing the wait delay of the X service.

When the terminal is in the DRX On duration, the data packet of the first service is scheduled by means of the scheduling DCI scrambled by the C-RNTI, that is, the first DCI is scrambled by using C-RNTI, and when the timer affecting the DRX On duration, such as a DRX On duration timer (drx-onDurationTimer), a DRX Off duration timer (drx-InactivityTimer), and the like, expires, the terminal enters an DRX Off duration. Since the requirement of the first service on the transmission delay is relatively high, the terminal monitors, based on the pre-configured parameter, the first DCI scrambled by the dedicated identifier of the first service, in order to prevent the terminal from waiting for the next DRX On duration and from introducing an unnecessary transmission delay, in this optional implementation manner.

Here, it should be noted that the first DCI scrambled by using the C-RNTI may also be monitored by using the method in this example.

Example 3: the service identifier X-RNTI (a dedicated identifier related to the first service) dedicated to a service, the monitoring method of the DCI (the first DCI) scrambled by the X-RNTI is indicated through a signaling such as layer 1 signaling/MAC layer signaling/high-layer signaling.

A service identifier (a dedicated identifier related to a first service) dedicated to a service is introduced as a detection identifier of service transmission, such as RNTI dedicated to a service, such as an X-RNTI; monitoring the DCI scrambled by the service identifier RNTI is not controlled by DRX, that is, in a DRX Off duration, the terminal can still perform corresponding DCI monitoring, and this example is described by taking an X-RNTI as an example.

Data scheduling on the service X is performed by using the DCI scrambled by the X-RNTI; whether the DCI scrambled by the X-RNTI is monitored in the DRX Off duration or not is indicated by the monitoring indication dedicated to the service. The monitoring indication dedicated to the service may be carried by signaling such as L1 signaling /MAC layer signaling/high-layer signaling.

The network-side device configures the search space configuration of the DCI (first DCI) scrambled by the X-RNTI for the terminal, and the specific parameters of the search space configuration may be consistent with the search space set parameters. The network-side device may send monitoring indication information (the third indication information) dedicated to the service to the terminal according to the service transmission situation, to notify the terminal whether to monitor the DCI scrambled by the X-RNTI in the DRX On duration and/or the DRX Off duration, specifically, one of the following methods may be adopted:

Method 1: L1 signaling carries monitoring indication information (third indication information) dedicated to a service.

When the network-side device determines that the current service is an X service, scheduling DCI signaling/non-scheduling DCI signaling in the DRX On duration carries the monitoring indication dedicated to the service, to instruct the terminal to perform DCI monitoring dedicated to the service in the DRX On duration and/or the DRX Off duration. The monitoring indication dedicated to the service may also be carried by the non-scheduling DCI in the DRX Off duration, to indicate that the terminal performs DCI monitoring dedicated to the service in the DRX Off duration, and third indication information may also carried by the energy-saving signal in the DRX Off duration, so as to instruct the terminal to monitor the first DCI in the DRX On duration and/or the DRX Off duration.

Method 2: The MAC CE carries monitoring indication information dedicated to the service (third indication information).

The network-side device may enable the monitoring indication information dedicated to the service to be carried in the MAC CE in the PDSCH in the DRX On duration, the terminal is instructed to monitor the DCI dedicated to the service (first DCI) in the DRX On duration and/or the DRX Off duration; the indication dedicated to the service may also be carried by the SPS PDSCH in the DRX Off duration, the terminal is instructed to monitor the DCI dedicated to the service in the DRX Off duration.

Method 3: The high-layer signaling carries monitoring indication dedicated to the service (third indication information).

The network-side device configures the monitoring indication information dedicated to the service by high-layer signaling, and when the value is a first value (for example, the first value is 1), the first value instructs the terminal to perform DCI monitoring specific to the service in the DRX Off duration; and when the value is the second value (e.g. the second value is 2) or the default, the second value indicates that the terminal does not need to perform DCI monitoring specific to the service in the DRX Off duration.

Here, it should be noted that the first DCI scrambled by using the C-RNTI may also be monitored by using the method in this example.

Example 4: the network-side device configures monitoring position information dedicated to a service, that is, the monitoring position information of the first DCI (including the monitoring window and/or the monitoring start position information).

Second monitoring position information dedicated to a service is configured in the DRX Off duration. In the DRX On duration, the terminal monitors the DCI search space configured according to the DRX On duration; and in the DRX Off duration, the terminal performs monitoring of scheduling DCI (first DCI) according to pre-configured second monitoring position information.

The network-side device pre-configures monitoring position information dedicated to X service within the DRX On duration and/or the DRX Off duration through the high-layer signaling. The method that may be used for configuring the monitoring position information dedicated to the X service has one or more of the following parameters:

configuring monitoring start time by means of monitoring periodicity and offset;
the monitoring start time $T_{start}$ of the window;
the monitoring duration;
the monitoring final time $T_{final}$ ;
time offset $T_{offset}$ between adjacent monitoring windows;
the number of monitoring start positions/monitoring windows in an DRX Off duration;
the number of monitoring start position/monitoring windows in the DRX On duration;
the offset from a start position/an end position of an existing first behavior is used as the monitoring start time, wherein the first behavior includes a periodic or semi-persistent behavior, such as periodic CSI RRM/RLM measurement, a slot where the SPS PDSCH is located, a slot where HARQ-ACK feedback of the SPS PDSCH is located, start time or expiration time of a RTT timer of the SPS PDSCH, a start position/an end position of the DRX cycle/On duration, periodic reference signals such as an SSB/CSI-RS/TRS, etc. The first behavior further includes an aperiodic behavior, such as downlink signaling, CSI measurement, a reference signal, such as CSI-RS, TRS, etc.

The configuration method for the monitoring window and/or monitoring start position is specifically illustrated with respect to the above parameters:

Example 1: the monitoring start time is configured according to the monitoring periodicity and the offset, for example, the start time satisfies the following conditions:

$$\left(n_f \cdot N_{slot}^{frame,\ \mu} + n_{s,\ f}^{\mu} - o_s\right) \bmod k_s = 0$$

,

wherein $n_f$ is a frame index, $n_{s,\ f}^{\mu}$ is a slot index under a subcarrier $\mu$; $N_{slot}^{frame,\ \mu}$ is the number of slots included in a sub-carrier $\mu$ in a next subframe, $k_s$ is monitoring periodicity, and $o_s$ is the first offset value. In addition, if the monitoring duration is configured, then one or more monitoring windows may be determined by configuring the time offset $T_{offset}$ between adjacent monitoring windows and/or the monitoring starting positions/ the number of monitoring windows in the DRX Off duration/DRX On duration.

Example 2: a monitoring window is determined by configuring the absolute starting time $T_{start}$ and the monitoring final time $T_{final}$ or the monitoring duration of the monitoring window; additionally, if the time offset $T_{offset}$ between adjacent monitoring windows and/or the monitoring start positions/the number of monitoring windows are configured, a plurality of monitoring windows may be determined.

Example 3: the offset value between the monitoring window or the monitoring start position/end position and the start position/the end position of the current periodic behavior is taken as the monitoring start time. The offset value may be an offset position after the start position/the end position of the periodic behavior, or an offset position before the start position/the end position of the periodic behavior.

When the network-side device receives X-service indication sent by the core network, or the network-side device identifies that the downlink data service is indicated as the X service, the network-side device may notify the terminal, through X-service indication (the third indication information), that the current service is the X service. The application layer of the terminal may also identify that the current service is the X service. Here, it should be noted that before the application layer of the terminal identifies the X service, original data transmission scheme is used, for example, the data transmission starts at the DRX On duration.

When the data transmission service is the X service, the terminal may monitor the DCI scheduling the X service in the DRX On duration and/or the DRX Off duration according to the pre-configured monitoring window or the monitoring occasion.

From the perspective of energy saving, the following method may also be adopted:

the first DCI carries an energy-saving indication (first indication information) of the terminal, for example, monitor-skipping indication and/or sleeping indication. For example, at least one of the first DCI, the layer 1 signaling, the energy-saving signal, the MAC layer signaling, the high-layer signaling including the first indication information may be configured to instruct the terminal to perform discontinuous DCI-monitoring behavior in the DRX Off duration, thereby saving a certain power consumption and reducing the wait delay of the X service.

Example 5: the DCI scrambled by the X-RNTI (the dedicated identifier of the first service) is only monitored in the monitoring window and/or at the monitoring start position in the DRX Off duration.

The network-side device configures a specific service identifier, such as an X-RNTI, for the DCI of scheduling the X-service. The DCI scrambled by the X-RNTI is not limited by the DRX Off duration, that is, monitoring may be performed in the DRX Off duration. The DCI scrambled for the X-RNTI may be monitored within the DRX On duration, or may not be monitored, see Example 1 and Example 2 for details.

When the terminal is in the DRX Off duration, the terminal monitors the DCI scrambled by the X-RNTI at the pre-configured monitoring window and/or the monitoring start position. The specific process may be detailed in the Example 4.

Example 6: for an identifier dedicated to the first service, different types of data transmission for the same service may also be extended, for example, an I frame, a P frame, and a B frame in the video streaming service. When the core network may indicate different encoded data streams, the network-side device may configure the dedicated data stream identifiers (such as an X-RNTI, etc.) by using transmission priorities of the different encoded data streams. Transmission schemes may be described in details in Example 1 to Example 5.

Example 7: the size of the monitoring window of the X service may be dynamically adjusted based on the first information.

Monitoring position information dedicated to a service in the DRX Off duration is configured. For example, in the DRX On duration, the terminal monitors the PDCCH search space configured according to the DRX On duration; and in the DRX Off duration, the terminal performs scheduling-DCI monitoring according to the pre-configured monitoring position information (the monitoring window or the monitoring start position).

Meanwhile, the network-side device configures the first information for the terminal, and the first information is configured to instruct the terminal to continue monitoring after monitoring the DCI dedicated to the service.

The first information may be carried by L1 signaling or MAC signaling or high-layer signaling. For example, the first information may be a monitoring timer or a duration, or may be indication signaling information, or may be a reference signal. Taking the monitoring timer as an example, when the monitoring timer does not expire, the terminal may continue to monitor the DCI dedicated to the service. When data transmission is performed at the end of the monitoring window due to delay jitter of a service data packet, the data packet can only be transmitted in a next monitoring window or a next monitoring occasion since there is no subsequent monitoring occasion, and the configuring the monitoring timer is beneficial to reducing the transmission delay caused by the delay jitter.

When the network-side device completes data transmission, the terminal is instructed to skip monitoring or sleep through the first indication information. The specific processes are same as those in Example 1 to Example 4.

FIG. 4 is a schematic structural diagram of a data transmission apparatus according to an embodiment of the present disclosure, the data transmission apparatus includes:

a generation unit 401, configured to generate first Downlink Control Information (DCI), where the first DCI is configured to schedule a first service;
a first sending unit 402, configured to send the first DCI in a Discontinuous Reception (DRX) On duration and/or a DRX Off duration.

In an optional implementation, the first DCI is scrambled by using a dedicated identifier related to the first service.

In an optional implementation, the data transmission apparatus further includes: a first configuration unit, configured to configure, for the first DCI, a first search space set in a DRX On duration and/or a second search space set in a DRX Off duration; wherein the first search space set and the second search space set are same or different.

In an optional implementation, the data transmission apparatus further includes: a second sending unit, configured to send first indication information to a terminal, where the first indication information is configured to indicate at least one of the following:

that the terminal skips monitoring and/or sleeps in a DRX On duration; and
that the terminal skips monitoring and/or sleeps in a DRX Off duration.

In an optional implementation, the data transmission apparatus further includes: a second configuration unit, configured to configure monitoring position information of the first DCI, where the monitoring position information of the first DCI includes at least one of the following:

first monitoring position information of the first DCI in the DRX On duration;
second monitoring position information of the first DCI in the DRX Off duration.

In an optional implementation, the second configuration unit is specifically configured to:
semi-statically configure the monitoring position information through high-layer signaling; dynamically configure the monitoring position information through first information.

In an optional implementation, the monitoring position information configured semi-statically includes: a monitoring window and/or monitoring start position information of the first DCI.

In an optional implementation, the monitoring position information semi-statically configured includes at least one of the following:
position information associated with first behavior; independent monitoring position information.

In an optional implementation, the data transmission apparatus further includes: a third sending unit, configured to send second indication information to the terminal, where the second indication information is used for indicating a first service.

In an optional implementation, the dedicated identifier related to the first service includes at least one of the following:

a dedicated identifier corresponding to a service type of the first service;
a dedicated identifier corresponding to a first data stream of the first service.

In an optional implementation, the data transmission apparatus further includes: a fourth sending unit, configured to send third indication information to a terminal, where the third indication information is configured to indicate whether the terminal performs monitoring of the first DCI in a DRX On duration and/or a DRX Off duration.

In an optional implementation, the third indication information is carried by at least one of the following signaling: layer 1 signaling; Media Access Control Control Element (MAC CE); high-layer signaling.

According to the data transmission apparatus of the embodiments of the present disclosure, the generation unit 401 generates the first DCI for scheduling the first service, and the first sending unit 402 sends the first DCI to the terminal in the DRX On duration and/or the DRX Off duration, the first DCI is DCI used for scheduling the first service, and the data transmission device configures dedicated data transmission information for the terminal, and sends the first DCI to the terminal in the DRX On duration and/or the DRX Off duration, so that the terminal can monitor the first DCI in a Discontinuous Reception (DRX) On duration and/or a DRX Off duration. In this way, the terminal can perform corresponding DCI monitoring for data dynamic scheduling according to the service characteristics without being limited by the DRX mechanism, thereby solving the problem that it is difficult to match the DRX cycle configuration with a specific service due to comprehensive influence of multiple services on the DRX parameter configuration, and unnecessary transmission delay is introduced, and achieving an effect that discontinuous reception of other services can also be ensured.

It should be noted that, the data transmission apparatus provided in the embodiments of the present disclosure is an apparatus capable of executing the data transmission method provided above, and all embodiments of the data transmission method are applicable to the apparatus, and the data transmission apparatus can achieve the same or similar beneficial effects.

As shown in FIG. 5, FIG. 5 is a schematic structural diagram of a network-side device according to an embodiment of the present disclosure, the network-side device includes a memory 520, a transceiver 510, and a processor 500. The memory 520 is configured to store a computer program; the transceiver 510 is configured to send and receive data under the control of the processor; and the processor 500 is configured to read the computer program in the memory 520 and perform the following operations:

generating first Downlink Control Information (DCI), where the first DCI is configured to schedule a first service;
sending the first DCI in a Discontinuous Reception (DRX) On duration and/or a DRX Off duration.

In an optional implementation, the first DCI is scrambled by using a dedicated identifier related to the first service.

In an optional implementation, the processor is further configured to read the computer program in the memory and perform the following operations:
configuring, for the first DCI, a first search space set in a DRX On duration and/or a second search space set in a DRX Off duration; wherein the first search space set and the second search space set are same or different.

In an optional implementation, the processor is further configured to read the computer program in the memory and perform the following operations:
sending first indication information to a terminal, where the first indication information is configured to indicate at least one of the following:

that the terminal skips monitoring and/or sleeps in a DRX On duration; and
that the terminal skips monitoring and/or sleeps in a DRX Off duration.

In an optional implementation, the processor is further configured to read the computer program in the memory and perform the following operations:
configuring monitoring position information of the first DCI, where the monitoring position information of the first DCI includes at least one of the following:

first monitoring position information of the first DCI in the DRX On duration;
second monitoring position information of the first DCI in the DRX Off duration.

In an optional implementation, the processor is further configured to read the computer program in the memory and perform the following operations:
semi-statically configuring the monitoring position information through high-layer signaling; and/or dynamically configuring the monitoring position information through first information.

In an optional implementation, the monitoring position information configured semi-statically includes: a monitoring window and/or monitoring start position information of the first DCI.

In an optional implementation, the monitoring position information semi-statically configured includes at least one of the following:
position information associated with first behavior; independent monitoring position information.

In an optional implementation, the processor is further configured to read the computer program in the memory and perform the following operations:
sending second indication information to the terminal, where the second indication information is used for indicating a first service.

In an optional implementation, the dedicated identifier related to the first service includes at least one of the following:

a dedicated identifier corresponding to a service type of the first service;
a dedicated identifier corresponding to a first data stream of the first service.

In an optional implementation, the processor is further configured to read the computer program in the memory and perform the following operations:
sending third indication information to a terminal, where the third indication information is configured to indicate whether the terminal performs monitoring of the first DCI in a DRX On duration and/or a DRX Off duration.

In an optional implementation, the third indication information is carried by at least one of the following signaling: layer 1 signaling; Media Access Control Control Element (MAC CE); high-layer signaling.

In FIG. 5, a bus architecture may include any number of interconnected buses and bridges. Specifically, various circuits including one or more processors represented by the processor 500 and a memory represented by the memory 520 linked together by. The bus architecture may also link together various other circuits, such as peripheral devices, voltage regulators, and power management circuits, etc. which are well known in the art, and therefore are not further described herein. The bus interface provides an interface. The transceiver 510 may be a plurality of elements, i.e. includes a transmitter and a receiver, and provides units for communicating with various other devices on a transmission medium, transmission media including transmission media such as a wireless channel, a wired channel, and an optical cable. For different user equipment, a user interface 530 may also be an interface that can be externally connected to a required device, and the connected device includes, but is not limited to, a keypad, a display, a speaker, a microphone, a joystick, etc.

The processor 500 is responsible for managing bus architectures and general processing, and the memory 520 may store data used by the processor 500 when performing operations.

Optionally, the processor 500 may be a Central Processing Unit (CPU), an Application-Specific Integrated Circuit (ASIC), a Field-Programmable Gate Array (FPGA), or a Complex Programmable Logic Device (CPLD), and the processor 500 may also adopt a multi-core architecture.

The processor 500 is configured to, by invoking the program instructions stored in the memory, perform any of the methods provided in the embodiments of the present application according to the obtained executable instructions. The processor 500 and the memory may also be physically separately arranged.

In the embodiments of the present disclosure, the network-side device generates the first DCI for scheduling the first service, and sends the first DCI to the terminal in the DRX On duration and/or the DRX Off duration, the first DCI is DCI used for scheduling the first service, and the networks-side device configures dedicated data transmission information for the terminal, and sends the first DCI to the terminal in the DRX On duration and/or the DRX Off duration, so that the terminal can monitor the first DCI in a Discontinuous Reception (DRX) On duration and/or a DRX Off duration. In this way, the terminal can perform corresponding DCI monitoring for data dynamic scheduling according to the service characteristics without being limited by the DRX mechanism, thereby solving the problem that it is difficult to match the DRX cycle configuration with a specific service since comprehensive influence of multiple services needs to be considered for the DRX parameter configuration, and unnecessary transmission delay is introduced, and achieving an effect that discontinuous reception of other services can also be ensured.

It should be noted that, the network-side device provided in the embodiments of the present disclosure is a network-side device capable of executing the data transmission method provided above, and all embodiments of the data transmission method are applicable to the network-side device, and the network-side device can achieve the same or similar beneficial effects.

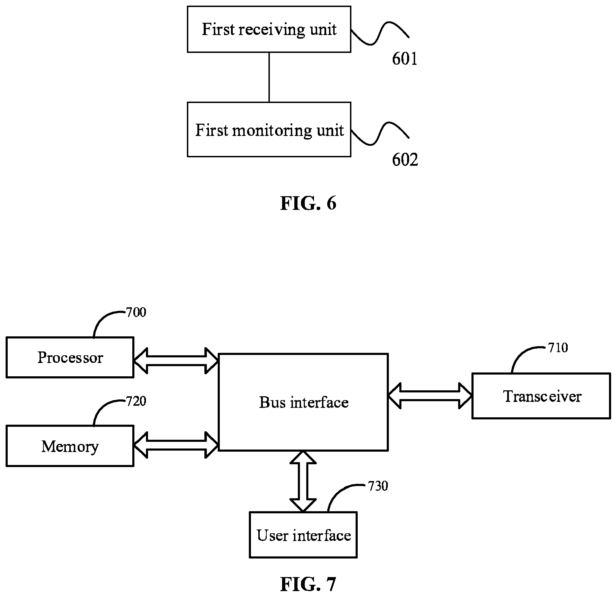

As shown in FIG. 6, which is a second schematic structural diagram of a data transmission apparatus according to an embodiment of the present disclosure, the data transmission apparatus includes:

a first receiving unit 601 configured to receive first Downlink Control Information (DCI) sent by a network-side device in a Discontinuous Reception (DRX) On duration and/or a DRX Off duration; where the first DCI is configured to schedule a first service; a first monitoring unit 602, configured to monitor the first DCI in the DRX On duration and/or the DRX Off duration.

In an optional implementation, the first DCI is scrambled by using a dedicated identifier related to the first service.

In an optional implementation, the first monitoring unit 602 is specifically configured to:

monitor the first DCI in a DRX On duration according to a first search space set configured by the network-side device; and/or monitor the first DCI in a DRX Off duration according to a second search space set configured by the network-side device.

The first search space set and the second search space set are the same or different.

In an optional implementation, the apparatus further includes: a second receiving unit, configured to receive first indication information sent by the network-side device, where the first indication information is configured to indicate at least one of the following:

that the terminal skips monitoring and/or sleeps in a DRX On duration; and that the terminal skips monitoring and/or sleeps in a DRX Off duration.

In an optional implementation, the apparatus further includes: a second monitoring unit, configured to monitor the first DCI according monitoring position information of the first DCI, where the monitoring position information of the first DCI includes at least one of the following:

first monitoring position information of the first DCI in the DRX On duration; second monitoring position information of the first DCI in the DRX Off duration.

In an optional implementation, the monitoring position information is pre-configured by the network-side device or predefined by a protocol.

In an optional implementation, the apparatus further includes: a third receiving unit, configured to:

receive the monitoring position information semi-statically configured through high-layer signaling by the network-side device; receive the monitoring position information dynamically configured according to first information by the network-side device.

In an optional implementation, the monitoring position information configured semi-statically includes: a monitoring window and/or monitoring start position information of the first DCI.

In an optional implementation, the monitoring position information semi-statically configured includes at least one of the following:

position information associated with first behavior; independent monitoring position information.

In an optional implementation, the apparatus further includes: a fourth receiving unit, configured to receive second indication information sent by the network-side device, where the second indication information is used for indicating the first service.

In an optional implementation, the dedicated identifier related to the first service includes at least one of the following:

a dedicated identifier corresponding to a service type of the first service; a dedicated identifier corresponding to a first data stream of the first service.

In an optional implementation, the apparatus further includes: a fifth receiving unit, configured to receive third indication information sent by the network-side device, where the third indication information is configured to indicate whether the terminal performs monitoring of the first DCI in a DRX On duration and/or a DRX Off duration.

In an optional implementation, the third indication information is carried by at least one of the following: layer 1 signaling; Media Access Control Control Element (MAC CE); high-layer signaling.

According to the data transmission apparatus of the embodiments of the present disclosure, the first receiving unit 601 receives the first DCI sent by the network-side device in the DRX On duration and/or the DRX Off duration, the first DCI is configured for scheduling the first service, and the first monitoring unit 602 monitors the first DCI in the DRX On duration and/or the DRX Off duration. In this way, the data transmission apparatus can perform corresponding DCI monitoring for data dynamic scheduling according to the service characteristics without being limited by the DRX mechanism, thereby solving the problem that it is difficult to match the DRX cycle configuration with a specific service since comprehensive influence of multiple services needs to be considered for the DRX parameter configuration, and unnecessary transmission delay is introduced.

As shown in FIG. 7, which is a schematic structural diagram of a terminal according to an embodiment of the present disclosure, the terminal includes a memory 720, a transceiver 710, and a processor 700. The memory 720 is configured to store a computer program; the transceiver 710 is configured to send and receive data under the control of the processor; and the processor 700 is configured to read the computer program in the memory 720 and perform the following operations:

> receiving first Downlink Control Information (DCI) sent by a network-side device in a Discontinuous Reception (DRX) On duration and/or a DRX Off duration; where the first DCI is configured to schedule a first service;
> monitoring the first DCI in the DRX On duration and/or the DRX Off duration.

In an optional implementation, the first DCI is scrambled by using a dedicated identifier related to the first service.

In an optional implementation, the processor is further configured to read the computer program in the memory and perform the following operations:

> monitoring the first DCI in a DRX On duration according to a first search space set configured by the network-side device; and/or
> monitoring the first DCI in a DRX Off duration according to a second search space set configured by the network-side device.

The first search space set and the second search space set are the same or different.

In an optional implementation, the processor is further configured to read the computer program in the memory and perform the following operations: receiving first indication information sent by the network-side device, where the first indication information is configured to indicate at least one of the following:

> that the terminal skips monitoring and/or sleeps in a DRX On duration; and
> that the terminal skips monitoring and/or sleeps in a DRX Off duration.

In an optional implementation, the processor is further configured to read the computer program in the memory and perform the following operations:
monitoring the first DCI according monitoring position information of the first DCI, where the monitoring position information of the first DCI includes at least one of the following:

> first monitoring position information of the first DCI in the DRX On duration;
> second monitoring position information of the first DCI in the DRX Off duration.

In an optional implementation, the monitoring position information is pre-configured by the network-side device or predefined by a protocol.

In an optional implementation, the processor is further configured to read the computer program in the memory and perform the following operations:

> receiving the monitoring position information semi-statically configured through high-layer signaling by the network-side device; and/or
> receiving the monitoring position information dynamically configured according to first information by the network-side device.

In an optional implementation, the monitoring position information configured semi-statically includes: a monitoring window and/or monitoring start position information of the first DCI.

In an optional implementation, the monitoring position information semi-statically configured includes at least one of the following:

> position information associated with first behavior;
> independent monitoring position information.

In an optional implementation, the processor is further configured to read the computer program in the memory and perform the following operations: receiving second indication information sent by the network-side device, where the second indication information is used for indicating the first service.

In an optional implementation, the dedicated identifier related to the first service includes at least one of the following:

> a dedicated identifier corresponding to a service type of the first service;
> a dedicated identifier corresponding to a first data stream of the first service.

In an optional implementation, the processor is further configured to read the computer program in the memory and perform the following operations: receiving third indication information sent by the network-side device, where the third indication information is configured to indicate whether the terminal performs monitoring of the first DCI in a DRX On duration and/or a DRX Off duration.

In an optional implementation, the third indication information is carried by at least one of the following: layer 1 signaling; Media Access Control Control Element (MAC CE); high-layer signaling.

In FIG. 7, a bus architecture may include any number of interconnected buses and bridges. Specifically, various circuits including one or more processors represented by the processor 700 and a memory represented by the memory 720 linked together by. The bus architecture may also link together various other circuits, such as peripheral devices, voltage regulators, and power management circuits, etc. which are well known in the art, and therefore are not further described herein. The bus interface provides an interface. The transceiver 710 may be a plurality of elements, i.e. includes a transmitter and a receiver, and provides units for communicating with various other devices on a transmission medium, transmission media including transmission media such as a wireless channel, a wired channel, and an optical cable. For different user equipment, a user interface 730 may also be an interface that can be externally connected to a required device, and the connected device includes, but is not limited to, a keypad, a display, a speaker, a microphone, a joystick, etc.

The processor 700 is responsible for managing bus architectures and general processing, and the memory 720 may store data used by the processor 700 when performing operations.

Optionally, the processor 700 may be a Central Processing Unit (CPU), an Application-Specific Integrated Circuit (ASIC), a Field-Programmable Gate Array (FPGA), or a Complex Programmable Logic Device (CPLD), and the processor may also adopt a multi-core architecture.

The processor is configured to, by invoking the program instructions stored in the memory, perform any of the methods provided in the embodiments of the present application according to the obtained executable instructions. The processor and the memory may also be physically separately arranged.

The terminal in the embodiments of the present disclosure receives the first DCI sent by the network-side device in the DRX On duration and/or the DRX Off duration, the first DCI is configured for scheduling the first service, and the terminal monitors the first DCI in the DRX On duration and/or the DRX Off duration. In this way, the terminal can perform corresponding DCI monitoring for data dynamic scheduling according to the service characteristics without being limited by the DRX mechanism, thereby solving the problem that it is difficult to match the DRX cycle configuration with a specific service since comprehensive influence of multiple services needs to be considered for the DRX parameter configuration, and unnecessary transmission delay is introduced.

It should be noted that, the terminal provided in the embodiments of the present disclosure is a terminal capable of executing the data transmission method, all embodiments of the data transmission method are applicable to the terminal, and the same or similar beneficial effects can be achieved by the terminal.

It should be noted that, the division of the units in the embodiment of the present disclosure is illustrative, and is merely a division of a logical function, there may be another division method during actual implementation. In addition, various functional units in the embodiments of the present disclosure may be integrated into one processing unit, or each of the units may exist alone physically, or two or more units may be integrated into one unit. The integrated unit may be implemented in the form of hardware, or may be implemented in the form of a software functional unit.

When the integrated unit is implemented in the form of a software functional unit and sold or used as an independent product, the integrated unit may be stored in a processor-readable storage medium. Based on such understanding, some or all or part of the technical solutions, or an essential part or a part contributing to the related art of the technical solutions, of the present disclosure may be embodied in the form of a software product, and the computer software product is stored in a storage medium, and includes several instructions for enabling a computer device (which may be a personal computer, a server, or a network device, etc.) or a processor to perform all or part of the steps of the method according to various embodiments of the present disclosure. The foregoing storage medium includes various media that can store program codes, such as a USB flash disk, a mobile hard disk, a read-only memory (ROM), a random access memory (RAM), a magnetic disk, or an optical disk.

Embodiments of the present disclosure further provide a processor-readable storage medium, where the processor-readable storage medium stores a computer program, and the computer program is configured to cause a processor to execute the data transmission method as described above. the processor-readable storage medium may be any usable medium or data storage device accessible by the processor, including but not limited to a magnetic memory (such as a floppy disk, a hard disk, a magnetic tape, a magneto-optical disk (MO), etc.), an optical memory (such as CD, DVD, BD, HVD, etc.), and a semiconductor memory (for example, a ROM, an EPROM, an EEPROM, a non-volatile memory (NAND Flash), a solid state disk (SSD)), etc.

Those skilled in the art should understand that the embodiments of the present disclosure may be provided as a method, a system, or a computer program product. Thus, the present disclosure may take the form of an entire hardware embodiment, an entire software embodiment, or embodiments incorporating software and hardware aspects. Moreover, the present disclosure may take the form of a computer program product implemented on one or more computer-usable storage media (including but not limited to a disk memory and an optical memory, etc.) including computer-usable program codes.

The present disclosure is described with reference to a flowchart and/or a block diagram of a method, a device (system), and a computer program product according to some embodiments of the present disclosure. It should be understood that each flow and/or block in the flowcharts and/or block diagrams, and combinations of flows and/or blocks in the flowcharts and/or block diagrams, can be implemented by computer-executable instructions. These computer-executable instructions may be provided to a processor of a general purpose computer, a special purpose computer, an embedded processor, or other programmable data processing device to generate a machine such that instructions executed by a processor of the computer or other programmable data processing device generate means for implementing functions specified in one or more flows of the flowchart and/or one or more blocks of the block diagram.

These processor-executable instructions may also be stored in a processor-readable memory that can direct a computer or other programmable data processing device to operate in a particular manner such that the instructions stored in the processor-readable memory produce a product that includes an instruction device that implements the functions specified in one or more flows of the flowchart and/or one or more blocks of the block diagram.

These processor-executable instructions may also be loaded onto a computer or other programmable data processing device such that a series of operational steps are performed on a computer or other programmable device to produce a computer-implemented process, such that the instructions executed on the computer or other programmable device provide steps for implementing the functions specified in one or more flows of the flowchart and/or one or more blocks of the block diagram.

It should be understood that the division of the above modules is merely a division of a logical function, and all or some of the modules may be integrated onto one physical entity during actual implementation, or may be physically separated. In addition, these modules may all be implemented in the form of software invoked by a processing element, or may all be implemented in the form of hardware; or some modules may be implemented in the form of a processing element invoking software, and some of the modules are implemented in the form of hardware. For example, the determining module may be a separately set processing element, or may be integrated in a certain chip of the foregoing apparatus, and in addition, the determining module may also be stored in a memory of the apparatus in the form of program codes, and a certain processing element of the apparatus invokes and executes the functions of the determining module. Implementations of other modules are similar. In addition, all or part of these modules may be integrated together, or may be implemented independently. The processing element described herein may be an integrated circuit having a signal processing capability. In an implementation process, each step of the above-mentioned method or each of the above modules may be completed by means of an integrated logic circuit of hardware in the processor element or an instruction in a software form.

For example, each module, unit, subunit, or sub-module may be one or more integrated circuits configured to implement the above method, for example, one or more application specific integrated circuits (ASICs), or one or more microprocessors (digital signal processors, DSPs), or one or more field programmable gate arrays (FPGAs), etc. For another example, when a certain module is implemented in the form of a processing element scheduling program codes, the processing element may be a general-purpose processor, for example, a central processing unit (CPU) or another processor that may invoke a program code. For another example, these modules may be integrated together and implemented in the form of a system-on-a-chip (SOC).

The terms "first," "second, "and the like in the specification and claims of the present disclosure are used to distinguish similar objects, and do not need to be used to describe a specific order or sequence. It should be understood that the terms used in this way may be interchanged under appropriate circumstances so that the embodiments of the disclosure described herein, for example, are implemented in an order other than those illustrated or described herein. Furthermore, the terms "include" and "have" and any variations thereof are intended to cover non-exclusive inclusion, for example, processes, methods, systems, products, or devices that include a series of steps or units are not necessarily limited to those steps or units clearly listed, but may include other steps or units not expressly listed or inherent to these processes, methods, products, or devices. In addition, the description and the claims use "and/or" indicate at least one of the connected objects, such as A and/or B and/or C, indicating that there are cases that A exists alone, B exists alone, C exists alone, and both A and B exist, both B and C exist, both A and C exist, and all A, B and C exist. Similarly, the use of "at least one of A and B" in this specification and in the claims should be understood as "a single A, a separate B, or both A and B".

Obviously, a person of ordinary skill in the art can make modifications and variations to the present disclosure without departing from the spirit and the protection scope of the present disclosure. If the modifications and the variations of the present disclosure fail within the scope of the claims and equivalents thereof, the present disclosure also includes the modifications and variations.

## Claims

1. A data transmission method, comprising:

generating first Downlink Control Information (DCI) by a network-side device, wherein the first DCI is configured to schedule a first service; sending the first DCI by the network-side device in a Discontinuous Reception (DRX) On duration and/or a DRX Off duration.

2. The method according to claim 1, wherein the first DCI is scrambled by using a dedicated identifier related to the first service.

3. The method according to claim 2, further comprising: configuring, by the network-side device for the first DCI, a first search space set in the DRX On duration and/or a second search space set in the DRX Off duration; wherein the first search space set and the second search space set are same or different.

4. The method according to claim 1, further comprising: sending first indication information to a terminal by the network-side device, wherein the first indication information is configured to indicate at least one of following:

   that the terminal skips monitoring and/or sleeps in the DRX On duration; and
   that the terminal skips monitoring and/or sleeps in the DRX Off duration.

5. The method according to claim 1 or 2, further comprising:
   configuring monitoring position information of the first DCI by the network-side device, wherein the monitoring position information of the first DCI comprises at least one of following:

   first monitoring position information of the first DCI in the DRX On duration;
   second monitoring position information of the first DCI in the DRX Off duration.

6. The method according to claim 5, wherein configuring the monitoring position information of the first DCI by the network-side device comprises at least one of following:

   semi-statically configuring the monitoring position information through high-layer signaling by the network-side device;
   dynamically configuring the monitoring position information through first information by the network-side device.

7. The method according to claim 6, wherein the monitoring position information configured semi-statically comprises: a monitoring window and/or monitoring start position information of the first DCI.

8. The method according to claim 6, wherein the monitoring position information semi-statically configured comprises at least one of following:

   position information associated with first behavior;
   independent monitoring position information.

9. The method according to claim 5, further comprising: sending second indication information to the terminal by the network-side device, wherein the second indication information is configured to indicate the first service.

10. The method according to claim 2, wherein the dedicated identifier related to the first service comprises at least one of following:

    a dedicated identifier corresponding to a service type of the first service;
    a dedicated identifier corresponding to a first data stream of the first service.

11. The method according to claim 1, further comprising: sending third indication information to a terminal by the network-side device, wherein the third indication information is configured to indicate whether the terminal monitors the first DCI in the DRX On duration and/or the DRX Off duration.

12. The method according to claim 11, wherein the third indication information is carried by at least one of following signaling:
    layer 1 signaling; Media Access Control Control Element (MAC CE); high-layer signaling.

13. A data transmission method, comprising:

    receiving first Downlink Control Information (DCI) sent by a network-side device in a Discontinuous Reception (DRX) On duration and/or a DRX Off duration by a terminal; wherein the first DCI is configured to schedule a first service;
    monitoring the first DCI in the DRX On duration and/or the DRX Off duration by the terminal.

14. The method according to claim 13, wherein the first DCI is scrambled by using a dedicated identifier related to the first service.

15. The method according to claim 14, wherein monitoring the first DCI in the DRX On duration and/or the DRX Off duration by the terminal comprises:

    monitoring the first DCI in the DRX On duration by the terminal according to a first search space set configured by the network-side device; and/or

monitoring the first DCI in the DRX Off duration by the terminal according to a second search space set configured by the network-side device,

wherein the first search space set and the second search space set are same or different.

16. The method according to claim 13, further comprising:
receiving, by the terminal, first indication information sent by the network-side device, wherein the first indication information is configured to indicate at least one of following:

that the terminal skips monitoring and/or sleeps in the DRX On duration;
that the terminal skips monitoring and/or sleeps in the DRX Off duration.

17. The method according to claim 13 or 14, further comprising:
monitoring the first DCI by the terminal according monitoring position information of the first DCI, wherein the monitoring position information of the first DCI comprises at least one of following:

first monitoring position information of the first DCI in the DRX On duration;
second monitoring position information of the first DCI in the DRX Off duration.

18. The method according to claim 17, wherein the monitoring position information is pre-configured by the network-side device or predefined by a protocol.

19. The method according to claim 17, further comprising at least one of following:

receiving, by the terminal, the monitoring position information semi-statically configured through high-layer signaling by the network-side device; and/or
receiving, by the terminal, the monitoring position information dynamically configured according to first information by the network-side device.

20. The method according to claim 19, wherein the monitoring position information configured semi-statically comprises:
a monitoring window and/or monitoring start position information of the first DCI.

21. The method according to claim 19, wherein the monitoring position information semi-statically configured comprises at least one of following:

position information associated with first behavior;
independent monitoring position information.

22. The method according to claim 17, further comprising:
receiving, by the terminal, second indication information sent by the network-side device, wherein the second indication information is configured to indicate the first service.

23. The method according to claim 14, wherein the dedicated identifier related to the first service comprises at least one of following:

a dedicated identifier corresponding to a service type of the first service;
a dedicated identifier corresponding to a first data stream of the first service.

24. The method according to claim 13, further comprising:
receiving, by the terminal, third indication information sent by the network-side device, wherein the third indication information is configured to indicate whether the terminal monitors the first DCI in the DRX On duration and/or the DRX Off duration.

25. The method according to claim 24, wherein the third indication information is carried by at least one of following:
layer 1 signaling; Media Access Control Control Element (MAC CE); high-layer signaling.

26. A data transmission apparatus, comprising:

a generation unit, configured to generate first Downlink Control Information (DCI), wherein the first DCI is configured to schedule a first service;
a first sending unit, configured to send the first DCI in a Discontinuous Reception (DRX) On duration and/or a DRX Off duration.

27. The apparatus according to claim 26, wherein the first DCI is scrambled by using a dedicated identifier related to the first service.

28. The apparatus according to claim 27, further comprising:
a first configuration unit, configured to configure, for the first DCI, a first search space set in the DRX On duration and/or a second search space set in the DRX Off duration; wherein the first search space set and the second search space set are same or different.

29. The apparatus according to claim 26, further comprising:
a second sending unit, configured to send first indication information to a terminal, wherein the first indication information is configured to indicate at least one of the following:

> that the terminal skips monitoring and/or sleeps in the DRX On duration; and
> that the terminal skips monitoring and/or sleeps in the DRX Off duration.

30. The apparatus according to claim 26 or 27, further comprising:
a second configuration unit, configured to configure monitoring position information of the first DCI, wherein the monitoring position information of the first DCI comprises at least one of following:

> first monitoring position information of the first DCI in the DRX On duration;
> second monitoring position information of the first DCI in the DRX Off duration.

31. The apparatus according to claim 30, wherein the second configuration unit is specifically configured to:

> semi-statically configure the monitoring position information through high-layer signaling;
> dynamically configure the monitoring position information through first information.

32. The apparatus according to claim 31, wherein the monitoring position information configured semi-statically comprises: a monitoring window and/or monitoring start position information of the first DCI.

33. The apparatus according to claim 31, wherein the monitoring position information semi-statically configured comprises at least one of following:

> position information associated with first behavior;
> independent monitoring position information.

34. The apparatus according to claim 30, further comprising:
a third sending unit, configured to send second indication information to the terminal, where the second indication information is configured for indicating the first service.

35. The apparatus according to claim 27, wherein the dedicated identifier related to the first service comprises at least one of following:

> a dedicated identifier corresponding to a service type of the first service;
> a dedicated identifier corresponding to a data stream of the first service.

36. The apparatus according to claim 26, further comprising:
a fourth sending unit, configured to send third indication information to a terminal, wherein the third indication information is configured to indicate whether the terminal monitors the first DCI in the DRX On duration and/or the DRX Off duration.

37. The apparatus according to claim 36, wherein the third indication information is carried by at least one of following signaling:
layer 1 signaling; Media Access Control Control Element (MAC CE); high-layer signaling.

38. A network-side device, comprising:
a memory, a transceiver, and a processor, wherein the memory is configured to store a computer program; the transceiver is configured to send and receive data under control of the processor; and the processor is configured to read the computer program in the memory and execute the following operations:

> generating first Downlink Control Information (DCI), wherein the first DCI is configured to schedule a first service;
> sending the first DCI in a Discontinuous Reception (DRX) On duration and/or a DRX Off duration.

39. The network-side device according to claim 38, wherein the first DCI is scrambled by using a dedicated identifier related to the first service.

40. The network-side device according to claim 39, wherein the processor is further configured to read a computer program in the memory and perform the following operations:
configuring, for the first DCI, a first search space set in the DRX On duration and/or a second search space set in the DRX Off duration; wherein the first search space set and the second search space set are same or different.

41. The network-side device according to claim 38, wherein the processor is further configured to read the computer program in the memory and perform the following operations:
sending first indication information to a terminal, wherein the first indication information is configured to indicate at least one of the following:

> that the terminal skips monitoring and/or sleeps in the DRX On duration;
> that the terminal skips monitoring and/or sleeps in the DRX Off duration.

42. The network-side device according to claim 38 or 39, wherein the processor is further configured to read the computer program in the memory and perform the following operations:
configuring monitoring position information of the first DCI, wherein the monitoring position information of the first DCI comprises at least one of following:

first monitoring position information of the first DCI in the DRX On duration;
second monitoring position information of the first DCI in the DRX Off duration.

43. The network-side device according to claim 42, wherein the processor is further configured to read the computer program in the memory and perform the following operations:

semi-statically configuring the monitoring position information through high-layer signaling; and/or
dynamically configuring the monitoring position information through first information.

44. The network-side device according to claim 43, wherein the monitoring position information configured semi-statically comprises:
a monitoring window and/or monitoring start position information of the first DCI.

45. The network-side device according to claim 43, wherein the monitoring position information semi-statically configured comprises at least one of following:
position information associated with first behavior;
independent monitoring position information.

46. The network-side device according to claim 42, wherein the processor is further configured to read the computer program in the memory and perform the following operations:
sending second indication information to the terminal, wherein the second indication information is configured to indicate the first service.

47. The network-side device according to claim 39, wherein the dedicated identifier related to the first service comprises at least one of following:

a dedicated identifier corresponding to a service type of the first service;
a dedicated identifier corresponding to a first data stream of the first service.

48. The network-side device according to claim 38, wherein the processor is further configured to read the computer program in the memory and perform the following operations:
sending third indication information to the terminal, wherein the third indication information is configured to indicate whether the terminal monitors the first DCI in the DRX On duration and/or the DRX Off duration.

49. The network-side device according to claim 48, wherein the third indication information is carried by at least one of following signaling:
layer 1 signaling; Media Access Control Control Element (MAC CE); high-layer signaling.

50. A data transmission apparatus, comprising:

a first receiving unit, configured to receive first Downlink Control Information (DCI) sent by a network-side device in a Discontinuous Reception (DRX) On duration and/or a DRX Off duration; wherein the first DCI is configured to schedule a first service;
a first monitoring unit, configured to monitor the first DCI in the DRX On duration and/or the DRX Off duration.

51. The apparatus according to claim 50, wherein the first DCI is scrambled by using a dedicated identifier related to the first service.

52. The apparatus according to claim 51, wherein the first monitoring unit is specifically configured to:

monitor, by the terminal, the first DCI in the DRX On duration according to a first search space set configured by the network-side device; and/or
monitor, by the terminal, the first DCI in the DRX Off duration according to a second search space set configured by the network-side device,
wherein the first search space set and the second search space set are same or different.

53. The apparatus according to claim 50, further comprising:
a second receiving unit, configured to receive first indication information sent by the network-side device, wherein the first indication information is configured to indicate at least one of following:

that the terminal skips monitoring and/or sleeps in the DRX On duration; and
that the terminal skips monitoring and/or sleeps in the DRX Off duration.

54. The apparatus according to claim 50 or 51, further comprising:
a second monitoring unit, configured to monitor the first DCI according monitoring position information of the first DCI, wherein the monitoring position information of the first DCI comprises at least one of following:

first monitoring position information of the first DCI in the DRX On duration;
second monitoring position information of the first DCI in the DRX Off duration.

55. The apparatus according to claim 54, wherein the monitoring position information is pre-configured by the network-side device or predefined by a protocol.

56. The apparatus according to claim 54, further comprising:
a third receiving unit, configured to receive the monitoring position information semi-statically configured through high-layer signaling by the network-side device; and/or, receive the monitoring position information dynamically configured according to first information by the network-side device.

57. The apparatus according to claim 56, wherein the monitoring position information configured semi-statically comprises: a monitoring window and/or monitoring start position information of the first DCI.

58. The apparatus according to claim 56, wherein the monitoring position information semi-statically configured comprises at least one of following:

position information associated with first behavior;
independent monitoring position information.

59. The apparatus according to claim 54, further comprising:
a fourth receiving unit, configured to receive second indication information sent by the network-side device, wherein the second indication information is configured for indicating the first service.

60. The apparatus according to claim 51, wherein the dedicated identifier related to the first service comprises at least one of following:

a dedicated identifier corresponding to a service type of the first service;
a dedicated identifier corresponding to a first data stream of the first service.

61. The apparatus according to claim 50, further comprising:
a fifth receiving unit, configured to receive third indication information sent by the network-side device, wherein the third indication information is configured to indicate whether the terminal monitors the first DCI in the DRX On duration and/or the DRX Off duration.

62. The apparatus according to claim 51, wherein the third indication information is carried by at least one of following:

layer 1 signaling; Media Access Control Control Element (MAC CE); high-layer signaling.

63. A terminal, comprising:
a memory, a transceiver, and a processor, wherein the memory is configured to store a computer program; the transceiver is configured to send and receive data under control of the processor; and the processor is configured to read the computer program in the memory and perform following operations:

receiving first Downlink Control Information (DCI) sent by a network-side device in a Discontinuous Reception (DRX) On duration and/or a DRX Off duration; wherein the first DCI is configured to schedule a first service;
monitoring the first DCI in the DRX On duration and/or the DRX Off duration.

64. The terminal according to claim 63, wherein the first DCI is scrambled by using a dedicated identifier related to the first service.

65. The terminal according to claim 64, wherein the processor is further configured to read the computer program in the memory and perform following operations:

monitoring the first DCI in the DRX On duration according to a first search space set configured by the network-side device; and/or
monitoring the first DCI in the DRX Off duration according to a second search space set configured by the network-side device,
wherein the first search space set and the second search space set are e same or different.

66. The terminal according to claim 63, wherein the processor is further configured to read the computer program in the memory and perform the following operations:
receiving first indication information sent by the network-side device, wherein the first indication information is configured to indicate at least one of following:

that the terminal skips monitoring and/or sleeps in the DRX On duration;
that the terminal skips monitoring and/or sleeps in the DRX Off duration.

67. The terminal according to claim 63 or 64, wherein the processor is further configured to read the computer program in the memory and perform the following operations:
monitoring the first DCI according monitoring position information of the first DCI, wherein the monitoring position information of the first DCI comprises at least one of following:

first monitoring position information of the first DCI in the DRX On duration;
second monitoring position information of the first DCI in the DRX Off duration.

68. The terminal according to claim 67, wherein the monitoring position information is pre-configured by the network-side device or predefined by a protocol.

69. The terminal according to claim 67, wherein the processor is further configured to read the computer program in the memory and execute the following operations:

receiving the monitoring position information semi-statically configured through high-layer signaling by the network-side device; and/or
receiving the monitoring position information dynamically configured according to first information by the network-side device.

70. The terminal according to claim 69, wherein the monitoring position information configured semi-statically comprises: a monitoring window and/or monitoring start position information of the first DCI.

71. The terminal according to claim 69, wherein the monitoring position information semi-statically configured comprises at least one of the following:
position information associated with first behavior;
independent monitoring position information.

72. The terminal according to claim 67, wherein the processor is further configured to read the computer program in the memory and perform the following operations:
receiving second indication information sent by the network-side device, wherein the second indication information is configured for indicating the first service.

73. The terminal according to claim 64, wherein the dedicated identifier related to the first service comprises at least one of following:

a dedicated identifier corresponding to a service type of the first service;
a dedicated identifier corresponding to a first data stream of the first service.

74. The terminal according to claim 63, wherein the processor is further configured to read the computer program in the memory and perform following operations:
receiving third indication information sent by the network-side device, wherein the third indication information is configured to indicate whether the terminal monitors the first DCI in the DRX On duration and/or the DRX Off duration.

75. The terminal according to claim 74, wherein the third indication information is carried by at least one of following:
layer 1 signaling; Media Access Control Control Element (MAC CE); high-layer signaling.

76. A processor-readable storage medium, wherein the processor-readable storage medium stores a computer program, wherein the computer program is configured to cause a processor to execute the method according to any one of claims 1-12, or the computer program is configured to cause a processor to execute the method according to any one of claims 13-25.

FIG. 1

Generating first Downlink Control Information (DCI) by a network-side device, where the first DCI includes information of scheduling a first service

201

Sending the first DCI in a Discontinuous Reception (DRX) On duration and/or a DRX Off duration by the network-side device

202

FIG. 2

Receiving first Downlink Control Information (DCI) sent by a network-side device in a Discontinuous Reception (DRX) On duration and/or a DRX Off duration by a terminal; where the first DCI includes information of scheduling a first service

301

Monitoring the first DCI in the DRX On duration and/or the DRX Off duration by the terminal

302

**FIG. 3**

Generation unit

401

First sending unit

402

**FIG. 4**

500

Processor

520

Memory

Bus interface

510

Transceiver

**FIG. 5**

First receiving unit

601

First monitoring unit

602

**FIG. 6**

700

Processor

720

Memory

Bus interface

710

Transceiver

730

User interface

**FIG. 7**

**INTERNATIONAL SEARCH REPORT**

| International application No. |
|---|
| **PCT/CN2022/107746** |

## A.    CLASSIFICATION OF SUBJECT MATTER

H04W 76/28(2018.01)i

According to International Patent Classification (IPC) or to both national classification and IPC

## B.    FIELDS SEARCHED

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNABS, CNTXT, CNKI, VEN, USTXT, EPTXT, WOTXT, 3GPP: 非连续接收, 监听, 监视, 检测, 监测, 侦听, 解码, 发送, 接收, 解调, 收发, 非激活, 睡眠, 休眠, 非活动, 特定, 预定, 特殊, 专属, 专用, 目标, 第一, 类型, 类别, 优先级, 业务, 服务, 控制信道, 控制信息, 控制消息, 标识, DRX, discontinuous reception, DCI, PDCCH, control channel, control information, inactivity, sleep, dormancy, service, RNTI, special+, predetermined, target, first, delay, latency, dedicated, specific

## C.    DOCUMENTS CONSIDERED TO BE RELEVANT

| Category* | Citation of document, with indication, where appropriate, of the relevant passages | Relevant to claim No. |
|---|---|---|
| Y | WO 2020107479 A1 (OPPO GUANGDONG MOBILE TELECOMMUNICATIONS CO., LTD.) 04 June 2020 (2020-06-04)<br>  description, page 2, line 39 to page 14, line 52 | 1-76 |
| Y | CN 112398573 A (HUAWEI TECHNOLOGIES CO., LTD.) 23 February 2021 (2021-02-23)<br>  description, paragraphs [0118] and [0142] | 1-76 |
| A | CN 111865536 A (HUAWEI TECHNOLOGIES CO., LTD.) 30 October 2020 (2020-10-30)<br>  description, paragraphs [0064]-[0105] | 1-76 |
| A | US 2020100179 A1 (COMCAST CABLE COMMUNICATIONS, LLC) 26 March 2020 (2020-03-26)<br>  description, paragraphs [0404]-[0453] | 1-76 |
| A | CN 110050495 A (SHARP KABUSHIKI KAISHA et al.) 23 July 2019 (2019-07-23)<br>  description, paragraphs [0107]-[0196] | 1-76 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 October 2022** | **28 October 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/107746**

| Patent document cited in search report | | | Publication date (day/month/year) | Patent family member(s) | | | Publication date (day/month/year) |
|---|---|---|---|---|---|---|---|
| WO | 2020107479 | A1 | 04 June 2020 | CN | 111512674 | A | 07 August 2020 |
| CN | 112398573 | A | 23 February 2021 | WO | 2021027910 | A1 | 18 February 2021 |
| CN | 111865536 | A | 30 October 2020 | WO | 2020221093 | A1 | 05 November 2020 |
| | | | | CN | 111865536 | B | 14 December 2021 |
| US | 2020100179 | A1 | 26 March 2020 | CA | 3056217 | A1 | 21 March 2020 |
| | | | | EP | 3627910 | A1 | 25 March 2020 |
| CN | 110050495 | A | 23 July 2019 | JP | 2019204983 | A | 28 November 2019 |
| | | | | MX | 2019003172 | A | 05 August 2019 |
| | | | | US | 2019223162 | A1 | 18 July 2019 |
| | | | | EP | 3522632 | A1 | 07 August 2019 |
| | | | | WO | 2018055997 | A1 | 29 March 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202110904386